(19) Europäisches Patentamt / European Patent Office / Office européen des brevets

(11) **EP 2 791 700 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **12806363.3**

(22) Anmeldetag: **26.11.2012**

(51) Int Cl.:
*G01S 15/93* *(2020.01)*   *G01S 7/527* *(2006.01)*
*G01S 7/533* *(2006.01)*

(86) Internationale Anmeldenummer:
**PCT/EP2012/073624**

(87) Internationale Veröffentlichungsnummer:
**WO 2013/087402 (20.06.2013 Gazette 2013/25)**

(54) **VORRICHTUNG ZUR ERFASSUNG AKUSTISCHER SIGNALE SOWIE DAZUGEHÖRIGES VERFAHREN**

APPARATUS FOR DETECTING AUDIBLE SIGNALS AND ASSOCIATED METHOD

DISPOSITIF DE DÉTECTION DE SIGNAUX ACOUSTIQUES ET PROCÉDÉ ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2011 DE 102011088346**

(43) Veröffentlichungstag der Anmeldung:
**22.10.2014 Patentblatt 2014/43**

(73) Patentinhaber: **Robert Bosch GmbH
70442 Stuttgart (DE)**

(72) Erfinder: **KARL, Matthias
70442 Stuttgart (DE)**

(56) Entgegenhaltungen:
**WO-A2-2007/056104     US-A- 5 272 656**

- **Anonymous: "Multiplizierer (Digitaltechnik) - Wikipedia", , 2 May 2011 (2011-05-02), XP055558154, Retrieved from the Internet: URL:https://de.wikipedia.org/w/index.php?title=Multiplizierer_(Digitaltechnik)&oldid=88363696 [retrieved on 2019-02-18]**

**Beschreibung**

Die Erfindung betrifft eine Vorrichtung sowie ein Verfahren zur Erfassung akustischer Signale, insbesondere von Ultraschallimpulsen bei der Umfelderfassung eines Fahrzeugs. Die Erfindung findet insbesondere Anwendung bei der Erfassung von akustischen Signalen, die von dem eigenen Fahrzeug oder/und von einem anderen Ort aus der Umgebung des Fahrzeugs her abgegebenen wurden und die optional an Objekten im Umfeld des Fahrzeugs reflektiert wurden. Ferner wird ein Kraftfahrzeug mit einem Fahrerassistenzsystem bereitgestellt, dass die erfindungsgemäße Vorrichtung aufweist.

Stand der Technik.

Zur akustischen Umfelderfassung von Fahrzeugen werden derzeit üblicherweise pulsweise messende Ultraschallsysteme verwendet, bei denen kurze Signalpulse von um 0,3 ms ausgesandt werden und anhand der Laufzeit der Reflexe dieser Pulse an Objekten der Umgebung mittels der Schallgeschwindigkeit der Abstand zu den Objekten bestimmt wird. Bei einer Relativbewegung von Schallquelle, Empfänger und/oder des optional im Ausbreitungspfad vorhandenen Reflektors zueinander verändert sich die Frequenz des empfangenen Signals im Verhältnis zu dem von der Schallquelle abgegebenen infolge Dopplerverschiebung.

Mittels von geeigneten Frequenzanalyseverfahren, beispielsweise dem Intrapulsverfahren oder dem Pulsmusterverfahren, können Veränderungen des empfangenen zum ausgesandten Signal, wie sie beispielsweise infolge der Dopplerverschiebungen auftreten, leicht detektiert werden. Ferner können zusätzlich zum Abstand Bewegungstendenzen sowie Signalformunterschiede und somit Objektunterschiede detektiert werden, wodurch die Blindzeiten infolge der diskontinuierlichen Arbeitsweise etwas reduziert werden. In der EP 2144069 A2 wird ein Pulsmuster-Frequenzanalyseverfahren und in der WO 2011009786 A1 werden Intrapuls-Frequenzanalyseverfahren angegeben.

Bekanntermaßen können die den sinusförmigen Signalen oder Signalgemischen innewohnenden Merkmale, wie die Dopplerverschiebungen oder andere, wahlweise (a) im Zeitbereich oder (b) im Frequenzbereich bestimmt werden, wie im Folgenden näher erläutert wird.

Bestimmung der Kenndaten sinusförmiger Signale

(a) im Zeitbereich

Ungestörte sinusförmige Signale lassen sich durch die Gleichung:

$$r(\tau) = A_1 \cdot \sin(2\pi f \cdot \tau + \varphi) + A_0 \qquad (1)$$

beschreiben.

Sind von diesem Signal markante Größen wie Nulldurchgänge

$$\left. \tau_p \right|_{\lim_{x \to +0}(r(\tau_p + x) - r(\tau_p - x)) > 0}, \ \left. \tau_n \right|_{\lim_{x \to +0}(r(\tau_n + x) - r(\tau_n - x)) < 0}$$

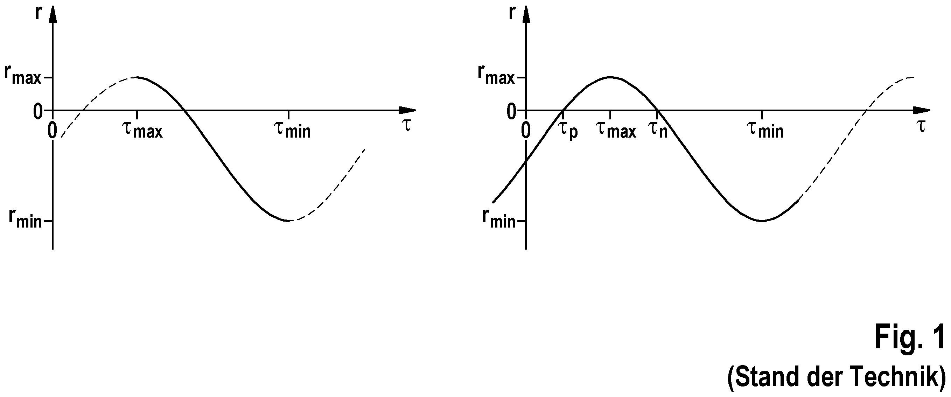

und Peaks, d.h. Wendepunkte $r_{max}(\tau_{max})$, $r_{min}(\tau_{min})$, bestimmbar, genügt die Zeit von ½ bis ¾ einer Signalperiode eines mit dem Mittelwert $A_0$ behafteten unbekannten sinusförmigen Signals zur Bestimmung der das Signal charakterisierenden Größen. Siehe hierzu die Fig. 1. So wird

$$A_0 = \frac{r_{max}(\tau_{max}) + r_{min}(\tau_{min})}{2}$$
$$A_1 = \frac{r_{max}(\tau_{max}) - r_{min}(\tau_{min})}{2} \qquad (2)$$

zur Bestimmung von $f$ bzw. $\tau$ auf die Geradengleichung

$$\arcsin\left(\frac{r(\tau) - A_0}{A_1}\right) = 2\pi f \cdot \tau + \varphi = \dots \qquad (3)$$

angewandt.

Durch die Anwendung von Schätzern über Positionsinformationen $r(\tau_x)$ und Gradienteninformationen $\dot{r}(\tau_x)$ kann die Zeit zur Bestimmung der Kenngrößen der Sinusfunktion noch weiter verringert werden. Der größte Gradient liegt bei mittelwertfreien Sinussignalen im Nullpunkt. Der Nulldurchgang selber entspricht bekanntlich bereits der Phaseninformation $\varphi$ bezüglich eines Beobachtungszeitpunktes. Verfolgt man von dort aus die Signaländerung mittels idealem Gradientenschätzer $\dot{r}(\tau_x)$, so können dort besonders leicht bei ungestörten Signalen bereits nach nur einigen wenigen Winkelgraden einer Periodendauer die noch offenen Kenngrößen $f$ und $A_1$ berechnet werden. Allgemeine folgt daraus, dass je mehr Kenngrößen $A_0$, $\varphi$, $f$ und $A_1$ bereits zu Beginn der Schätzung bekannt sind, desto rascher eine Bestimmung der noch offenen Kenngrößen gelingt. So sind bei störungsfreien Sinussignalen im Zeitbereich maximal ¾ der Periodendauer zur Bestimmung aller Größen erforderlich.

Für eine hohe Genauigkeit ist dazu jedoch eine entsprechend hohe Abtastfrequenz $F \gg f$, am besten sogar eine zeitkontinuierliche Signalverarbeitung erforderlich. Je größer eine additive Störung bzw. ein additives Rauschen ist, desto länger muss der Einfluss des Rauschens durch Mittelung über mehrfach in mehreren aufeinander folgenden Signalperioden bestimmte Kenngrößen unterdrückt werden.

Anspruchsvolle Systeme müssen zukünftig in der Lage sein, gleichzeitig eintreffende Signale wie z.B. Echos anhand ihrer Signalfrequenzen voneinander trennen zu können. Dies lässt sich mittels Signalanalyse im Zeitbereich nur schwierig realisieren.

b) im Frequenzbereich

Im Frequenzbereich werden die Merkmale periodischer Sinussignale mittels von Filtern bestimmt, während der Gleichanteil $A_0$ durch Mittelung gewonnen wird. Wichtigste Merkmale von Filtern für periodische Signale sind Filterfrequenz $f_h$, Bandbreite $B$ und Phasenabhängigkeit. Je mehr die Frequenz $f$ des zu untersuchenden periodischen Signals der Filterfrequenz $f_h$ eines Filters gleicht, desto stärker schwingt ein solches Filter im Vergleich zu Filtern anderer Filterfrequenz $f_h$. Die Bandbreite $B = f_o - f_u$ beschreibt, in welchem Frequenzbereich $f_u \leq f_h < f_o$ um die Filterfrequenz $f_h$ herum die Signalfrequenz $f$ schwanken darf, ohne dass die Stärke der Schwingung, d.h. die die Auslenkungsamplitude des Filters deutlich abgenommen hat, beispielsweise eine Abnahme weniger als 3dB. Bei gegebener Signalamplitude $A_1$ nimmt die Stärke der Schwingung zu, je geringer die Bandbreite $B$ ist. Dieses Merkmal wird auch durch den Parameter "Güte" $Q = f_h/B$ zusammengefasst.

Filter, die unabhängig von der Phasenlage des zu untersuchenden Signals zur Phasenlage des beobachtenden Messsystems sind, werden als inkohärente Filter bezeichnet, da sie keine Phasenabhängigkeit besitzen. Als kohärente Filter bezeichnet man hingegen phasenabhängige Filter. Dreht sich die Phase des zu untersuchenden Signals gegenüber der des Messsystems bei kohärenten Filtern um 90° so ändert sich der Schwingungszustand diese Filter von maximaler Auslenkung in Resonanz zu Ruhe bzw. umgekehrt.

Je kleiner die Bandbreite des Filters, desto länger dauert es jedoch, bis das Filter eingeschwungen ist. Dieses Phänomen kann man auch als Unschärfe der Frequenzdetektion bezeichnen.

Um mittels Filter eine Frequenz sicher detektieren zu können, ist die Zeit bis zum Erreichen des eingeschwungenen Zustands des Filters abzuwarten, die üblicher Weise mehr als eine Periode dauert. Diese Zeit ist somit im Allgemeinen viel größer als im Vergleich zur Parameterbestimmung im Zeitbereich. Dabei kann die zur Bestimmung der Kenngrößen $\varphi$, $f$ und $A_1$ erforderliche Zeit verringert werden, wenn bereits der Gradient bei den Schwingungsintensitäten einer Bank von Filtern mit zueinander leicht versetzten Filterfrequenzen $f_h$ ausgewertet wird, was vergleichbar mit der Gradientenmethode im Zeitbereich ist.

Ferner kann insbesondere die Dopplerverschiebung durch zeitdiskretisierendes Abtasten von analogen Signalen bestimmt werden. Ein Vorzug der Digitalisierung von analogen Signalen ist dabei, dass nach dem Abtasten und Quantisieren dieser Signale keine weiteren Signalstörungen hinzukommen. Analoge Signalverarbeitungen hingegen leiden unter Parameterschwankungen und an mit jeder Verarbeitungsstufe zunehmenden Störungen.

Daher werden in anspruchsvollen Systemen zukünftig abgetastete, digitalisierte Signale zu verarbeiten sein. Eine solche Verarbeitung zeitdiskreter Signale erreicht man leicht mittels Filtern.

Für die nachfolgende Verarbeitung ist zumeist wichtig, dass die gewonnenen Informationen über Momentanamplitude quasi in Echtzeit zur Verfügung gestellt werden, was gegen komplizierte Faltungsrechnungen und gegen Fouriertransformationen, wie z.B. Short-Time-FFT spricht, da sie jeweils einen Satz von Abtastwerten schubweise, d.h., diskontinuierlich verarbeiten. Prinzipiell bekannt ist es, beispielsweise aus der Dissertation des Erfinders Thema "Power-Line-Systeme" [Karl, Matthias: Möglichkeiten der Nachrichtenübertragung über elektrische Energieverteilnetze auf der Grundlage europäischer Normen. Fortschr.-Ber. VDI Reihe 10 Nr. 500. Düsseldorf: VDI Verlag 1997. (ISBN 3-18-350010-8)], dass effiziente Filter quasikontinuierlich gemäß folgendem Bildungsgesetz arbeiten:

$$y_i = \left| \frac{1}{N+1} \cdot \sum_{k=0}^{N} \left( e^{j2\pi f/F \cdot (i-k)} \cdot r_{(i-k)} \right) \right|$$

$$= \left| \frac{1}{N+1} \cdot \sum_{k=0}^{N} \left( \cos\left(2\pi f/F \cdot (i-k)\right) \cdot r_{(i-k)} + j \cdot \sin\left(2\pi f/F \cdot (i-k)\right) \cdot r_{(i-k)} \right) \right| \quad (4)$$

$$\left| \frac{1}{N+1} \cdot \sum_{k=0}^{N} \left( a_{(i-k)} \cdot r_{(i-k)} + j \cdot b_{(i-k)} \cdot r_{(i-k)} \right) \right|$$

Nachteilig an solchen Filtern ist, dass sie viele Multiplikationsakkumulator-Operationen (Englische: Multiply & Accumulate-Operations) (MAC) erfordern, bei denen die Abtastwerte $r_i = r(i \cdot F^{-1}) \approx r(\tau)$ mit Koeffizienten $a$ und $b$ multipliziert und anschließend aufaddiert werden. Die Koeffizienten sind im Allgemeinen gebrochene Zahlen im Wertebereich [-1, ... ,+1]. Für die Berechnung eines Ausgangswertes $y_i$ müssen gemäß (4) in der zu jedem Zeitpunkt $i$ verfügbaren Zeitspanne $F^{-1}$ neben der Betragsbildung $2N + 2$ MAC-Operationen in jedem Filter durchgeführt werden. Zur Realisierung solch komplexer Rechnungen sind daher im Allgemeinen spezielle Rechnerkerne, die sog. Signalprozessoren, erforderlich.

Ferner ist zumeist eine hohe Zahl von Filtern zur optimalen Signalanalyse erforderlich. In der Tabelle 1 ist für verschiedene Filterfrequenzen $f_h$ aufgelistet, in welchem Frequenzband dopplerverschobene Signale bei einer Relativgeschwindigkeit von maximal $\pm 60$ km/h wiederzufinden sind und wie viele Filter bei der jeweiligen Mittenfrequenz zur Detektion der Dopplerverschiebung bei optimaler inkohärenter Demodulation pulsdauermodulierter Signale erforderlich sind.

Tabelle 1

| Trägerfrequenz fc | Frequenzband bei Dopplerverschiebung | | Demodulatorzahl zur Dapplerdetektion bei Pulsdauern von: | | | | |
|---|---|---|---|---|---|---|---|
| | 60 km/h | -60 km/h | 0,17 ms | 1,00 ms | | 6,00 ms | |
| 48,00 kHz | 43,29 kHz | 52,71 kHz | 1 Stk. | 9 Stk. | = 15 km/h je Demod | 57 Stk. | = 2,1 km/h je Demod. |
| 24,00 kHz | 21,66 kHz | 26,35 kHz | 1 Stk. | 5 Stk. | = 30 km/h je Demod. | 29 Stk. | = 4,3 km/h je Demod. |
| 16,00 kHz | 14,43 kHz | 17,57 kHz | 1 Stk. | 3 Stk. | = 60 km/h je Demod | 19 Stk. | = 6,7 km/h je Demod. |
| 12,00 kHz | 10,82 kHz | 13,18 kHz | 1 Stk. | 3 Stk. | = 60 km/h je Demod. | 15 Stk. | = 8,6 km/h je Demod. |
| 9,60 kHz | 8,66 kHz | 10,54 kHz | 1 Stk. | 1 Stk | ohne Dopplerdetektion | 11 Stk. | = 12 km/h je Demod. |
| 8,00 kHz | 7,22 kHz | 8,78 kHz | 1 Stk. | 1 Stk. | ohne Dopplerdetektion | 9 Stk. | = 15,0 km/h je Demod. |
| 6,86 kHz | 6,18 kHz | 7,53 kHz | 1 Stk. | 1 Stk. | ohne Dopplerdetektion | 9 Stk. | = 15 km/h je Demod |
| 6,00 kHz | 5,41 kHz | 6,59 kHz | 1 Stk. | 1 Stk. | ohne Dopplerdetektion | 7 Stk. | = 20 km/h je Demod |
| ... | | | | | | | |

So sind beispielsweise bei einer Mittenfrequenz von 48 kHz und Pulsdauern von 6 ms 57 Filter erforderlich, um die im Frequenzbereich von 43,3 bis 52,7 erwarteten Signale mittels einer Bank von Filtern mit gegeneinander versetzten Filterfrequenzen $f_h$ optimal auszuwerten. Um das Beispiel fortzuführen, beim Betreiben von parallel $N_{Filter} = 57$ Stk. solcher Filter bei einer Abtastfrequenz von $F = 192 kHz$ ist im allgemeinen Fall unter der Bedingung $N_\alpha \cdot F^{-1} = T_p$ mit $T_p = 6$ ms eine MAC-Frequenz von $F \cdot N_{Filter} \cdot 2 \cdot N_\alpha = F \cdot N_{Filter} \cdot 2 \cdot T_p \cdot F \approx 25$ GHz erforderlich, allein um die Signale eines empfangenden Sensors bei nur einer Mittenfrequenz bezüglich Amplitudenverlauf und Dopplerverschiebung zu analysieren.

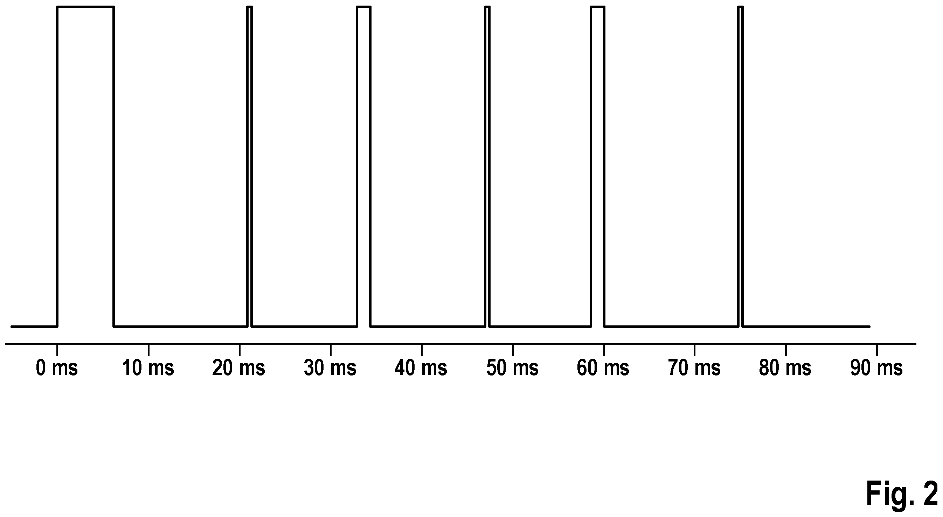

In Fig. 2 wird eine Sequenz von beispielhaft drei unterschiedlichen Pulsdauern gezeigt. Auf jede der Pulsdauern müsste in diesem Beispiel gemäß der zuvor genannten Tabelle bei optimaler Filterung eine entsprechende Zahl von Filtern realisiert werden. Ein solcher Satz von auf eine Bandbreite angepassten Filtern mit gegeneinander versetzten Filterfrequenzen $f_h$ wird hier als Filterbank bezeichnet. Sind beispielsweise bei einer Mittenfrequenz von 48 kHz Dopplerverschiebungen eines wie im obigen Bild dargestellten pulsdauermodulierten Signals im Bereich von $\pm 60$ km/h zu analysieren, so ist für Echoanteile mit einer Pulsdauer von 0,17 ms nur ein Filter und für die anderen Echoanteile mit einer Pulsdauer von 1 ms weitere 9 Filter und für die anderen Echoanteile mit einer Pulsdauer von 6 ms weitere 57 Filter, also in Summe 67 Filter allein für die um die Mittenfrequenz $f_c = 48$ *kHz* erforderlich. Handelt es sich in einem alternativen Beispiel sogar beispielhaft um ein 3-näres Signal bei dem auf den drei Mittenfrequenzen $f_c = 48$ *kHz* und $f_c = 24$ *kHz* sowie $f_c = 16$ *kHz* jeweils nach einem wie im vorgenannten Timingdiagramm dargestellten Pulsmuster zu suchen ist, so sind gemäß der Tabelle weite 35 Filter zur Signalanalyse um die $f_c = 24$ *kHz* und weitere 23 Filter zur Signalanalyse um die $f_c = 16$ *kHz* erforderlich, d.h., es sind in Summe 125 Filter parallel zu betreiben.

Bei kohärenter Demodulation verdoppelt sich die Zahl der Filter bekanntlich. Insgesamt ist daher zum heutigen Stand der Technik eine effiziente Filterung der Signale gemäß den weiter oben diskutierten Erfordernissen sehr teuer und mit zumutbaren Aufwand kaum zu bewerkstelligen.

Aus dem Dokument WO2007056104 A2 ist ein System zur Gewinnung eines Ultraschallsignals bekannt, das eine Signalverarbeitungseinheit aufweist, die zur Gewinnung von Ultraschallsignalen aus einem Ultraschallwandler mit einer Vielzahl von Elementen angepasst ist.

Aus dem Dokument US 5,272,656 A ist eine Vorrichtung zur Erfassung von akustischen Signalen bekannt, die einen Filter mit einem aus einer Vielzahl von Multiplizierern ausgebildeten Koeffizientengenerator aufweist. Die Muptiplizierer sind jeweils dazu ausgebildet, einen Koeffizienten mit einem Abtastwert zu multiplizieren.

Aus dem Dokument XP 055558154 ist es bekannt, dass eine digitale Multiplikation durch eine Abfolge von Additionen und Schiebeoperationen realisiert werden kann.

Offenbarung der Erfindung

Es wird eine Vorrichtung zur Erfassung von akustischen Signalen gemäß dem beigefügten unabhängigen Patentanspruch geschaffen.

Es wird eine Vorrichtung zur Erfassung von akustischen Signalen einer Schallquelle, insbesondere von Ultraschallimpulsen bei der Umfelddetektion eines Fahrzeugs, bereitgestellt, die eine Abtastvorrichtung zum Umwandeln von eingehenden kontinuierlichen Signalen in zeitdiskrete Signale aufweist, wobei die Vorrichtung ein auf die Abtastvorrichtung folgendes Verzögerungsleitungs (Englisch: "delay line")-Modul aufweist, das Abtastwerte von der Abtastvorrichtung empfängt und dazu eingerichtet ist, gleichzeitig sowohl einen an seinem Eingang anliegenden Abtastwert

$$ r_{i-N_D}\Big|_{N_D>0} $$

$r_i$ sowie zumindest einen verzögerten Abtastwert $\phantom{xxx}$ bereitzustellen. Ferner weist die Vorrichtung eines oder mehrere auf das Verzögerungsleitungsmodul folgende Rechenwerke auf, die mit filternden Eigenschaften ausgestattet sind und zueinander parallel arbeiten können. Jedes Rechenwerk weist dabei ein als Koeffizientengenerator ausgebildetes Schaltwerk auf, das dazu eingerichtet ist, in Abhängigkeit von einem Abtasttakt $i$ zu steuern, ob von dem Verzö-

$$ r_{i-N_D}\Big|_{N_D>0} $$

gerungsleitungsmodul bereitgestellte Werte $r_i$ und/oder $\phantom{xxx}$ ignoriert werden oder wahlweise zum bisherigen Rechenergebnis $y_{Ih\,D(i-1)}$ bzw. $y_{QhD(i-1)}$ addiert oder davon subtrahiert werden. Ferner weist jedes Rechenwerk ein von dem Schaltwerk angesteuertes Addier-/Subtrahierwerk, und einen mit dem Abtasttakt $i$ steuerbaren Ergebnisspeicher auf, der dazu eingerichtet ist, das von dem Addier-/Subtrahierwerk aktualisierte Ergebnis als neues Rechenergebnis $y_{Ih\alpha i}$ bzw. $y_{Qh\alpha i}$ zur Weiterverarbeitung bereitzustellen.

Es wird ferner ein Verfahren zur Erfassung von akustischen Signalen bereitgestellt, bei dem die zuvor genannte Vorrichtung verwendet wird, wobei ein eingehendes kontinuierliches Signal $r(t)$ durch Abtasten mit der Abtastperiode $F^{-1}$ mit $t = i \cdot F^{-1}$ in ein zeitdiskretisiertes Signal $r_i$ gewandelt wird und digital gefiltert wird, wobei die im Allgemeinen übliche Multiplikation mit idealen, dem Wert einer auf einen Phasenwinkel angewandten Winkelfunktion entsprechenden Koeffizienten substituiert wird durch eine Kombination von einem oder mehreren der folgenden Schritte:

- Addition oder Subtraktion einer Variante des aktuellen Abtastwertes $r_i$ oder einem durch Rechtschieben daraus gewonnenen Bruchteils $\vec{r_i}$ $\vec{\vec{r}}_i$ ; $\vec{\vec{\vec{r}}}_i$ ; ; .... davon zu einem das bisherige Filterergebnis repräsentierenden Speicherwert

$y_{lhD(i-1)}$ bzw. $y_{QhD(i-1)}$

- Entfernen des Anteils dieser jeweiligen Variante mittels Umkehroperation, das heißt, mittels Subtraktion oder Addition des verzögerten Abtastwertes $r_{i-N_D}\big|_{N_D>0}$ oder einem durch Rechtschieben daraus gewonnenen Bruchteils $\vec{r}_{i-N_D}$;

$\vec{r}_{i-N_D}$; $\vec{\vec{r}}_{i-N_D}$; ... davon zu einem das bisherige Filterergebnis repräsentierenden Speicherwert $y_{lhD(i-1)}$ bzw. $y_{QhD(i-1)}$

- ergänzend dazu optional zusätzlich Addition oder Subtraktion einer weiteren zur vorherigen Variante unterschiedlichen Variante des aktuellen Abtastwertes $r_i$ oder einem durch Rechtschieben daraus gewonnenen Bruchteils $\vec{r}_i$;

$\vec{r}_i$; $\vec{\vec{r}}_i$; .... davon zu einem das bisherige Filterergebnis repräsentierenden Speicherwert $y_{lhD(i-1)}$ bzw. $y_{QhD(i-1)}$ sowie dementsprechendes Entfernen des Anteils dieser jeweiligen weiteren Variante mittels Umkehroperation, das heißt, mittels Subtraktion oder Addition des verzögerten Abtastwertes $r_{i-N_D}\big|_{N_D>0}$ oder einem durch Rechtschieben daraus gewonnenen Bruchteils $\vec{r}_{i-ND}$; $\vec{r}_{i-N_D}$; $\vec{\vec{r}}_{i-N_D}$; ... davon zu einem das bisherige Filterergebnis repräsentierenden Speicherwert $y_{lhD(i-1)}$ bzw. $y_{QhD(i-1)}$.

Ferner werden geeignete Schaltungsarchitekturen zur Realisierung des approximierten Koeffizientenverhaltens aufgezeigt sowie Verfahren zur Auswertung der Filterergebnisse.

Somit wird mit der Erfindung vorteilhaft eine Signalverarbeitungsarchitektur zur kosteneffizienten Analyse von akustischen Signalen, insbesondere abgetasteten Ultraschallsignalen $r(\tau)$ geschaffen, die bevorzugt für solche Signale gut geeignet ist, deren Signalfrequenz in einem relativ schmalen Band von zumeist kleiner als $\pm 15\%$ um eine Mittenfrequenz $f_c$ angesiedelt ist. Die bereitgestellte Architektur ist nicht nur für Ultraschallsignale sondern für die Analyse anderer akustischer Signale, wie z.B. von "natürlich vorkommendem" funktionsbedingtem Eigenschall und/oder Fremdschall und/oder von andersartig synthetisierten akustischen Messsignalen vorteilhaft anwendbar. Die erfindungsgemäße Schaltung ist insbesondere deswegen kosteneffizient, weil die MAC-Operation mit den Koeffizienten $a$ und $b$ ohne im Allgemeinen übliche universelle Multiplikationshardware ausgeführt wird.

Darüber hinaus liegt der Erfindung die Idee zugrunde, die Signalverarbeitungsaufgaben zu reduzieren, indem das Verhältnis von Abtastfrequenz und Mittenfrequenz fixiert wird, so dass die Verarbeitung besonders einfach wird. Dem kommt vorteilhaft entgegen, dass die durch die Dopplerverschiebung auftretenden Signalveränderungen in einem Band von zumeist kleiner als $\pm 10\%$ Frequenzabweichung um die Frequenz des abgegebenen Signals der Schallquelle liegt. Die wird mittels Filter durchgeführt, da diese im Vergleich zur Verarbeitung mittels diskontinuierlicher Verfahren, wie z.B. schneller Fourier Transformation (Abk. FFT), in Echtzeit kontinuierlich genaue Laufzeitergebnisse liefern können, was für ortende System besonders wichtig ist.

Nachfolgend wird in Gleichung (5) anhand eines Beispiels veranschaulicht, wie ein inkohärentes Filter leicht realisiert werden kann.

$$y_i = \left| \frac{1}{N+1} \cdot \sum_{k=0}^{N} \left( e^{j 2\pi f / F \cdot (i-k)} \cdot r_{(i-k)} \right) \right|_{f/F=1/4}$$

$$= \left| \frac{1}{N+1} \cdot \sum_{k=0}^{N} \left( e^{j\pi/2 \cdot (i-k)} \cdot r_{(i-k)} \right) \right|$$

$$= \left| \frac{1}{N+1} \cdot \left( \sum_{k=0}^{N} \left( \cos(\pi/2 \cdot (i-k)) \cdot r_{(i-k)} \right) + j \cdot \sum_{k=0}^{N} \left( \sin(\pi/2 \cdot (i-k)) \cdot r_{(i-k)} \right) \right) \right|_{n=i-k} \quad (5)$$

$$= \left| \frac{1}{N+1} \cdot \left( \sum_{n=i}^{i-N} \left( \cos(\pi/2 \cdot n) \cdot r_n \right) + j \cdot \sum_{n=i}^{i-N} \left( \sin(\pi/2 \cdot n) \cdot r_n \right) \right) \right|$$

$$= \left| \qquad y_{Ii} \qquad\qquad\qquad + j \cdot y_{Qi} \right|$$

In diesem Sonderfall $F = 4 \cdot f$ gilt bei $n$ = 0; 1; 2; ..., $n \in G$ für $\cos(\pi/2 \cdot n)$=1; 0; -1; 0;... und für $\sin(\pi/2 \cdot n)$= 0;1; 0; -1;..., wodurch die Multiplikationen auf simple Additionen bzw. Subtraktionen der ansonsten unveränderten Versionen der Abtastwerte $r_i$ reduziert werden.

Jedoch ist die Erfindung nicht auf die Implementierung in Form eines derartigen Filters beschränkt. Vielmehr wird der Anwender die Erfindung je nach dem speziellen Anwendungsfall entsprechend anpassen und verwenden.

In Tabelle 2 werden für einige erfindungsgemäß bevorzugten Beziehungen von Mitten zu Abtastfrequenzen sowie die bestenfalls im Schaltwerk des Koeffizientengenerators zu erzielenden Phasenwinkel der Ausdrücke ($2\pi f/F \cdot i$) in der Einheit ° dargestellt.

Tabelle 2

| Sample-Nummer *i* | | | | | | | | | | | | | | | | |
|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 |
| Teiler | entsprechende Phasenwinkel zur Berechnung der Korrelatorkoeffizienten | | | | | | | | | | | | | | | |
| fc = F/4 | **0°** | **90°** | **180°** | **270°** | usw. | | | | | | | | | | | |
| fc = F/8 | **0°** | 45° | **90°** | 135° | **180°** | usw. | | | | | | | | | | |
| fc=F/12 | **0°** | 30° | 60° | **90°** | 120° | 150° | **180°** | 210° | usw. | | | | | | | |
| fc = F/16 | **0°** | 22,5° | 45° | 67,5° | **90°** | 112,5° | 135° | 157,5° | **180°** | usw. | | | | | | |
| fc = F/20 | **0°** | 18° | 36° | 54° | 72° | **90°** | 108° | 126° | 144° | 162° | **180°** | usw. | | | | |
| fc = F/24 | **0°** | 15° | 30° | 45° | 60° | 75° | **90°** | 105° | 120° | 135° | 150° | 165° | **180°** | usw. | | |
| fc = F/28 | **0°** | 12,86° | 25,71° | 38,57° | 51,43° | 64,29° | 77,14° | **90°** | 102,9° | 115,7° | 128,6° | 141,4° | 154,3° | 167,1° | **180°** | usw. |
| fc = F/32 | **0°** | 11,25° | 22,5° | 33,75° | **45°** | 56,25° | 67,5° | 78,75° | **90°** | usw. | | | | | | |
| ... | | | | | | | | | | | | | | | | |

Vorteilhafte Weiterbildungen der Erfindung sind in den Unteransprüchen angegeben und in der Beschreibung beschrieben.

Das Verhältnis der Abtastfrequenz $F$ zur Filterfrequenz $f_h$ folgt bevorzugt der Beziehung:

$$F = 4 f_h \cdot (1;\ 2;\ 3;\ 4;\ ...) \pm 15\% . \qquad (6)$$

Bevorzugt werden die von dem Verzögerungsleitungsmodul bereitgestellten Werte über als Datenpool ausgebildete Weiterleitungen von dem Rechenwerk genutzt.

Gemäß einer Weiterbildung der Erfindung ist die Vorrichtung dazu eingerichtet, an den in einem Taktintervall von dem Verzögerungsleitungsmodul bereitgestellten Werten $r_i$ und $r_{i-N_D}\big|_{N_D > 0}$ einfache oder mehrfache Rechtsschiebeoperationen durchzuführen und so verfeinerte Approximationen der idealen Filterkoeffizienten zu erzeugen, die in dem Taktintervall von dem Rechenwerk verarbeitet werden können.

In einer bevorzugten Ausführungsform ergibt dies den Koeffizientenwert 0,5 bzw. -0,5, was einem einfachen Rechtsschieben entspricht, wodurch zusammen mit den Werten 1; 0; -1 ohne irgendeine Multiplikation bzw. zusätzliche Addition/Subtraktion auf besonders günstige Weise bereits 5 Koeffizientenstufen durch das Schaltwerk generiert werden können und bei einem Koeffizientenabstand von 0,5 somit höchstens ein Quantisierungsfehler von 0,25 entstehen würde, was maximal zumeist vernachlässigbare -18dB, bezogen auf den Gesamtkoeffizientenbereich von 2 entspricht. Ferner lassen sich vorteilhaft zusätzlich zu den Koeffizienten 1; 0,5; 0; -0,5; -1 ohne weitere Addition/Subtraktion die Koeffizienten 0,25; 0,125; 0,0625; ...; sowie deren negative Äquivalente bestimmen.

Die Vorrichtung kann ferner dazu eingerichtet sein, zur verfeinerten Koeffizientenerzeugung im Rechenwerk für jeden in dem Taktintervall von dem Verzögerungsleitungsmodul bereitgestellten Werten $r_i$ und $r_{i-N_D}\big|_{N_D > 0}$ durch das Addier-/Subtrahierwerk bis zu maximal zwei Additionen und/oder Subtraktionen mit dem jeweiligen Wert $r_i$ bzw. $r_{i-N_\alpha}\big|_{N_\alpha > 0}$, und/oder einem durch Rechtsschieben erzeugten Bruchteil $\vec{r_i}$; $\vec{\vec{r_i}}$ ; $\vec{\vec{\vec{r_i}}}$ ; ... bzw. $\vec{r}_{i-N_\alpha}$; $\vec{\vec{r}}_{i-N_D}$ ; $\vec{\vec{\vec{r}}}_{i-N_D}$ ; ... des Wertes durchzuführen.

Damit werden auf günstige Weise zumindest die weiteren drei Koeffizienten 0,375; 0,625, 0,875 sowie deren negative Äquivalente generiert. Somit ist das verbleibende Koeffizientenrauschen geringer als -24dB.

Den folgenden Ausführungen liegt ein weiterer Gedankengang zur Optimierung der Erfindung zugrunde.

Es werden, wie bereits erwähnt, die Phasenwinkel vorgegebener idealer Koeffizienten, wie z.B. $\sin(60°) \cdot r_i = 0{,}5 \cdot \sqrt{3} \cdot r_i$ substituiert durch die Addition bzw. Subtraktion des Abtastwerts $r_i$ bzw. maximal eines um ein oder mehrere Stellen der Binärzahlendarstellung nach Rechts verschobener Varianten $\vec{r_i}$; $\vec{\vec{r_i}}$ ; $\vec{\vec{\vec{r_i}}}$ ; ... der Abtastwerts $r_i$, was somit nur einem angenäherten äquivalenten Koeffizienten entspricht.

Bekanntlich entspricht ein Rechtsschieben einer Binärzahl einer Division durch 2. So eignet sich beispielsweise für den idealen Koeffizienten $\sin(60°) = 0{,}5 \cdot \sqrt{3}$ als äquivalenter Koeffizient $(1-2^{-3}) \approx \sin(60°)$, der in Digitallogik durch eine Subtraktion eines um 3 Binärstellen nach Rechts verschoben Abtastwertes $\vec{\vec{\vec{r_i}}}$ von dem Abtastwert $r_i$ selbst dargestellt werden kann, d.h.:

$$r_i - \vec{\vec{\vec{r_i}}} = \left(1 - 2^{-3}\right) \cdot r_i = 0{,}875 \cdot r_i \approx \sin\left(60°\right) \cdot r_i = 0{,}5 \cdot \sqrt{3} \cdot r_i \qquad (7)$$

In diesem Fall beträgt der verbleibende Rechenfehler $\dfrac{1 - 2^{-3}}{\sin\left(60°\right)} - 1 \approx 1\%$, der im Allgemeinen bei der Signalverarbeitung im Rauschen untergehen wird. Äquivalenterweise ergibt sich beispielsweise für einen Phasenwinkel

$$\frac{1-2^{-2}}{\sin(45°)} - 1 \approx 6\%.$$

von 45° ein Fehler von lediglich

In der nachfolgenden Tabelle 3 werden einige bevorzugte Koeffizienten und ihre Realisierung durch maximal eine weitere Addition und/oder Subtraktion dargestellt:

Tabelle 3

| Koeffizient | | | Fehler | Zusammensetzung des Äquivalents | | | | | |
|---|---|---|---|---|---|---|---|---|---|
| Ideal | | Äquiv. | | $2^3$ | $2^{-1}$ | $2^{-2}$ | $2^{-3}$ | $2^{-4}$ | $2^{-5}$ |
| ... | | | | | | | | | |
| sin(72°) | =0,951 | **0,9688** | 2% | 1 | | | | | -0,031 |
| ... | | | | | | | | | |
| sin(68°) | =0,924 | **0,9375** | 1 % | 1 | | | | -0,063 | |
| sin(60°) | =0,866 | **0,875** | 1 % | 1 | | | -0,125 | | |
| sin(45°) | =0,707 | **0,75** | 6% | 1 | | -0,25 | | | |
| sin(30°) | =0,500 | **0,5** | 0% | | 0.5 | | | | |
| sin(23°) | =0,383 | **0,375** | -2% | | | 0,25 | 0,125 | | |
| sin(18°) ... | =0,309 | **0,3125** | 1 % | | | 0,25 | | 0,0625 | |

Ferner kann die Vorrichtung mehrere von den erfindungsgemäßen Rechenwerken, die parallel zueinander arbeiten können, aufweisen und ferner derart ausgestaltet sein, dass die mehreren Rechenwerke wenn sie betrieben werden unterschiedliche verzögerte Abtastwerte $r_{i-N_\alpha}\big|_{N_\alpha>0}$ ; $r_{i-N_\beta}\big|_{N_\beta>0}$, mit $N_\alpha \neq N_\beta$ verwenden, wobei die von den jeweiligen Koeffizientengeneratoren der Rechenwerke erzeugte Filterfrequenz $f_h$ gleich sein kann.

Dies hat den Vorteil, dass die Erfindung günstig für verschiedene Filterbandbreiten anwendbar ist.

Gemäß einer anderen Weiterbildung können mehrere von den Rechenwerken, die parallel zueinander arbeiten können, derart eingerichtet sein und/oder angesteuert werden, dass sie wenn sie betrieben werden jeweils die gleichen verzögerten Abtastwerte $r_{i-N_D}\big|_{N_D>0}$ verwenden, so dass ihre Addier- und Subtrahiereinheiten im gleichen Rhythmus jedoch im Verhältnis zueinander paarweise versetzt, um zumindest eine Abtastwertestelle, die verzögerten Abtastwerte $r_{i-N_D}\big|_{N_D>0}$ verarbeiten, so dass in den Ergebnisspeichern voneinander unterschiedliche, kohärente Ergebnisse $y_{IhDi}$ bzw. $y_{QhDi}$ bereit gestellt werden können.

Ferner können erfindungsgemäß mehrere von den Rechenwerken, die parallel zueinander arbeiten können, derart eingerichtet sein und/oder angesteuert werden, dass sie wenn sie betrieben werden jeweils die gleichen verzögerten Abtastwerte $r_{i-N_D}\big|_{N_D>0}$ verwenden, wobei die von den Koeffizientengeneratoren erzeugten Filterfrequenzen $f_h$ unterschiedlich voneinander sind.

Dies ist insbesondere bei der Suche gleicher Pulsdauern bei unterschiedlichen Mittenfrequenzen $f_c$, beispielsweise bei einem m-ären Signal und/oder beim gleichzeitigen Empfang von Echos unterschiedlicher Signalfrequenz von großem Vorteil. Somit ist die erfindungsgemäße Architektur optimal auf *m*-äre Mehrträgersignale erweiterbar. Sie ist auch in der Lage, aus dem Signal bei einer und optional bei weiterer Mittenfrequenzen, beispielsweise des *m*-ären Signals, parallel Filter für verschiedene Filterbandbreiten $F\cdot(N_\alpha+1)^{-1}$; $F\cdot(N_\beta+1)^{-1}$; ... zu betreiben, um beispielsweise ein Gemisch von Pulsdauern jeweils optimal filtern zu können.

Erfindungsgemäß kann die Vorrichtung ferner eine Nachverarbeitungseinrichtung aufweisen, die dazu ausgebildet ist, aus den Ergebnissen $y_{IhDi}$ bzw. $y_{QhDi}$ zumindest durch stückweise Approximation von Nichtlinearitäten eine Abschätzung einer Amplitude $A_1(\tau)$ entsprechend der optimalen Gleichung $y_{hDi} = \sqrt{y_{IhDi}^2 + y_{QhDi}^2}$ zu erzeugen,

und/oder aus dem Verhältnis von $y_{IhDi}$ und $y_{QhDi}$ sowie optional deren Vorzeichen, Informationen über eine Phasenlage

$\varphi(\tau)$, bzw. der Änderung der Phasenlage $\dot{\varphi}(\tau)$ bzw. eine Präzisierung von Aussagen über die Echolaufzeit bzw. über die Objektform bereitzustellen.

Ferner kann die Vorrichtung eine Auswerteeinheit aufweisen, die dazu eingerichtet ist, aus den in den Ergebnisspeichern gespeicherten Ergebnissen $y_{IhDi}$ und $y_{QhDi}$ Aussagen herzuleiten über:

- die Form des akustischen Eingangssignals aus einem Satz möglicher eintreffender Signalformen bzw. äquivalent über die Form eine Reflektorobjekts und/oder über
- die Signalstärke bzw. Reflektivität zumindest eines im Übertragungsweg des akustischen Signals befindlichen Reflektorobjekts und/oder über
- die Laufzeit eines ausgesandten Signals bzw. über daraus abgeleitete Größen und/oder über
- die Dopplerverschiebung zwischen der Frequenzlage eines ausgesandten und eines empfangen akustischen Signals bzw. daraus abgeleitete Größen wie insbesondere eine Relativbewegung.

Insgesamt kann daher aufgrund der Erfindung vorteilhaft je Filterausgang in Echtzeit die Amplitude $A_1(\tau)$ und die Frequenzlage $f_S(\tau)$ eines Signals bestimmt werden, um anhand dieser Informationen mittels einer nachfolgenden Auswerteschaltung Informationen / Warnungen zum Beispiel für den Bediener des Fahrzeugs über Situationen im Fahrzeugumfeld zu generieren bzw. um ein Fahrzeug in seiner Fahrbewegung z.B. durch Lenkung, Beschleunigung und/oder Bremsen zu beeinflussen bzw. Vorrichtungen zur Schadensvermeidung bzw. Reduktion der Unfallschwere, wie z.B. Gurtstraffer, Fensterheber, aufstellbare Kopfstützen, Airbags usw. zu parametrieren bzw. zu aktivieren.

Ferner wird ein Kraftfahrzeug mit einem Fahrerassistenzsystem geschaffen, das die erfindungsgemäße Vorrichtung aufweist.

Zeichnungen

Ausführungsformen der Erfindung werden anhand der Zeichnungen und der nachfolgenden Beschreibung näher erläutert. Es zeigen:

Figur 1      markante Größen eines Sinussignals, skizziert anhand zweimal einer vollen Schwingung, gemäß dem Stand der Technik,

Figur 2      der zeitliche Verlauf einer beispielhaften Sequenz mit drei unterschiedlichen Impulsdauern, gemäß dem Stand der Technik,

Figur 3      eine Skizze der globalen Architektur einer Vorrichtung zur Erfassung von akustischen Signalen gemäß einem ersten Ausführungsbeispiel der Erfindung,

Figur 4      eine Verschaltungsskizze einer zweiten Ausführungsform der Erfindung, bei der die Addierer der Rechenwerke auch zur Negierung von Abtastwerten genutzt werden,

Figur 5      eine Verschaltungsskizze einer dritten Ausführungsform der Erfindung, bei der im Vergleich zu Fig. 4 das Negieren und das Rechtsschieben unmittelbar nach der Delay-Line erfolgt,

Figur 6      eine Verschaltungsskizze des Rechenwerks der in Fig. 5 gezeigten dritten Ausführungsform der Erfindung,

Figur 7      einen Graph mit der Zeitfunktion einer idealen Filter-Referenz sowie den daraus durch Abtasten gewonnenen idealen Koeffizienten sowie mit den entsprechenden erfindungsgemäß daraus approximierten Koeffizienten in einem Fall in dem die Abtastfrequenz genau die vierfache Filterfrequenz beträgt,

Figur 8      einen Graph mit der Zeitfunktion einer idealen Filter-Referenz einer gegenüber Fig. 7 leicht geringeren Filterfrequenz sowie den daraus durch Abtasten gewonnenen idealen Koeffizienten sowie mit den erfindungsgemäß dementsprechenden approximierten Koeffizienten des Wertebereichs {-1; 0; 1},

Figur 9      einen Graph mit der Zeitfunktion einer idealen Filter-Referenz sowie den daraus durch Abtasten gewonnenen idealen Koeffizienten gemäß Figur 8 sowie mit den erfindungsgemäß dementsprechenden approximierten Koeffizienten des Wertebereichs {-1; -0,5; 0; 0,5; 1}, wobei im Vergleich zu Fig. 8 auch einmalig rechtsgeschobene Werte im Wertebereich der Koeffizienten verwendet werden,

Figur 10 einen Graph mit der Zeitfunktion einer idealen Filter-Referenz sowie den daraus durch Abtasten gewonnenen idealen Koeffizienten gemäß Figur 9 sowie mit den erfindungsgemäß dementsprechenden approximierten Koeffizienten des Wertebereichs {-1$^k$·(2$^{-n}$-2$^{-m}$), mit $n,m,k \in$ {0; 1; 2; 3; 4;... }}, wobei zusätzlich ein weiterer optional im Koeffizientengenerator rechtgeschobenen Wert addiert und subtrahiert jeweils verwendet wird,

Figur 11 einen Graph mit der Zeitfunktion einer idealen Filter-Referenz sowie den daraus durch Abtasten gewonnenen idealen Koeffizienten mit einer gegenüber Fig. 8 bis Fig. 10 niedrigeren Filterfrequenz, wie sie zum Empfang von breitbandigeren Signalen erforderlich sind, sowie mit den erfindungsgemäß dementsprechenden approximierten Koeffizienten des Wertebereichs gemäß Fig. 11,

Figur 12 einen Graph mit der Zeitfunktion einer idealen Filter-Referenz sowie den daraus durch Abtasten gewonnenen idealen Koeffizienten mit einer gegenüber Fig. 11 niedrigeren Filterfrequenz, wie sie zum Empfang von noch breitbandigeren Signalen erforderlich sind, sowie mit den erfindungsgemäß dementsprechenden approximierten Koeffizienten des Wertebereichs gemäß Fig. 10, und

Figur 13 eine Skizze von zeitlichen Verläufen der Zunahme und Abnahme der Filterreaktionen auf einen kurzen lauten oder leisen langen Impuls, oben: bei einem auf lange Pulsdauern angepasstes Filter unten: bei einem auf kurze Pulsdauern angepasstes Filter.

Ausführungsformen der Erfindung

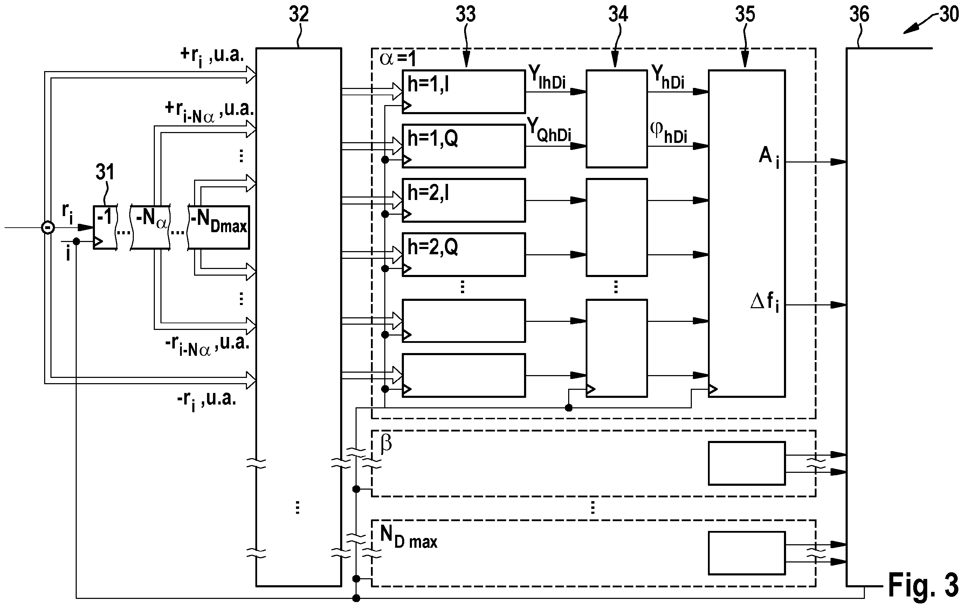

Gemäß einer ersten Ausführungsform der Erfindung, die in Fig. 3 gezeigt ist, setzt sich die globale Auswertearchitektur 30 zusammen aus:

- einem Verzögerungsleitungsmodul "Delay-Line" 31 bestehend aus $N_{D\,max}$ Speicherzellen zur Verzögerung der Abtastwerte $r_i$ mit einer maximalen Verzögerung $N_{D\,max}$ und zur Bereitstellung von verzögerten Abtastwerten $r_{i-N_D}$ sowie deren Negativwerten $-r_{i-N_D}$ an ausgewählten Stellen $N_D = N_\alpha; N_\beta; ...; N_{D\,max}$ der Delayline 31 und erforderlichenfalls entsprechender rechtsgeschobener Varianten davon,
- einem Datenpool 32 zur Weiterleitung der zuvor bereitgestellten Daten zu den nachfolgenden Rechenwerken 33, das vergleichbar mit einem Verdrahtungsnetzwerk ist,
- Rechenwerke 33, die je Filterfrequenz $f_h$ und je Filterbandbreite $F·(N_D+1)^{-1}$ mittels Koeffizientengeneratoren die zu einem Rechenschritt jeweils benötigten und von der Delay-Line 31 bereitgestellten Werte auf ein nachfolgendes Addierwerk legen, damit deren Ergebnisse synchron zum Abtasttakt jeweils in nachfolgende Speicherzellen für die Inphase $y_{IhDi}$ bzw. Quadraturphase $y_{QhDi}$ übernommen werden,
- Nachverarbeitungseinrichtungen 34, die z.B. aus den Inphase- und Quadraturphase-Werten $y_{IhDi}$, $y_{QhDi}$ *einen* Wert für den Betrag $y_{hDi}$ bzw. für die Phase $\varphi_{hDi}$ bilden, und
- Auswerteeinrichtungen 35, die beispielsweise für eine Filterbandbreite $F·(N_D+1)^{-1}$ mittels Maximumssuche und/oder mittels Einrichtungen, die das Über- bzw. Unterschreiten von Schwellwerten auswerten, aus einem Satz von Filterausgangswerten zu jedem Abtasttaktzeitpunkt $i$ bestimmen, auf welcher der analysierten Filterfrequenzen $f_h$ sich zu diesem Zeitpunkt das Maximum $y_{max\,Di} = max(y_{hDi})$ *für* $\forall h$ befand, und die aus der Relation der Frequenz des angenommen Signals der Schallquelle $f_c$ zu der Filterfrequenz $f_h$, auf dem das Maximum $y_{max\,Di} = y_{hDi}$ aufgetreten war, auf die Dopplerverschiebung und damit auf die Relativbewegung zwischen Schallquelle, Empfänger und optional auf in diesem Ausbreitungspfad befindlichem Reflektor schlussfolgern können.

Alternativ kann die Auswerteeinrichtung 35 anhand des gleichzeitigen Überschreitens mehrer Filterausgänge auf das Eintreffen eines Mehrton-Signals oder das Vorhandensein mehrerer Reflektoren unterschiedlicher Relativbewegung schlussfolgern. Alternativ kann die Auswerteeinrichtung 35 aus dem Zeitverlauf der Filterausgangssignale auf den Empfang von Signalen mit zeitveränderlicher Signalfrequenz schließen. Die Ausgangssignale der Auswerteeinrichtungen 35 werden an eine Weiterverarbeitung 36 geleitet. Diese Weiterverarbeitung kann beispielsweise anhand der Ausgangsignale auf das Eintreffen verschiedener Signalformen schlussfolgern. Wird beispielsweise bei einer Auswerteinrichtung bestehend aus mehreren Filterbandbreiten $F·(N_D+1)^{-1}$ mit $N_D = N_\alpha; N_\beta; ...; N_{D\,max}$ als Ausgangssignal $A_{Di}$ = $y_{max\,Di}$ übergeben, kann aus den Zeitverläufen, wie anhand von Figur 14 dargestellt, auf das Auftreten verschiedener Signalformdauern geschlussfolgert werden.

Im Allgemeinen Fall wird für jede Filterbandbreite $F·(N_D+1)^{-1}$ zu jeder Filterfrequenz $f_h$ ein separates Filter realisiert, ohne jedoch ausschließen zu wollen, dass die Ergebnisse mehrerer Filter miteinander kombiniert werden, wie z.B. dass Ergebnisse der Filter größerer Bandbreite aus den Ergebnissen der Filter kleinerer Bandbreite abgeleitet werden.

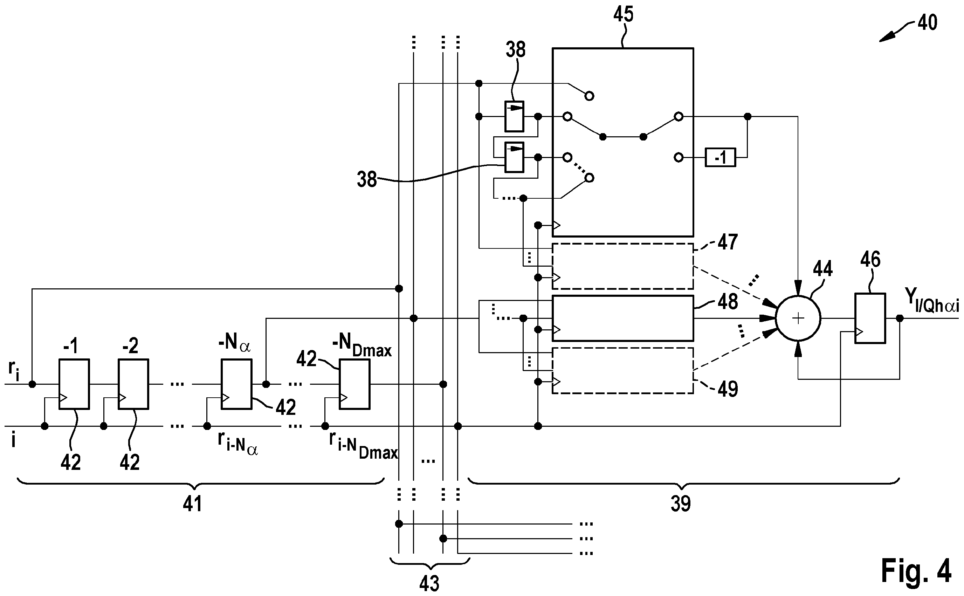

In Fig. 4 wird eine Verschaltungsskizze 40 einer zweiten Ausführungsform der Erfindung gezeigt. Gemäß Fig. 4 werden die Addierer 44 der Rechenwerke 39 auch zur Negierung von Abtastwerten genutzt und sind in der Lage, neben der ersten Version der Abtastwerte jeweils auch maximal eine zweite Version als Bruchteil der ersten Version hinzu zu addieren bzw. mittels negierter Ausführung zu subtrahieren:

Die Delay-Line 41 besteht aus einer Reihe von $N_{D\,max}$ hintereinander geschalteten Speichern 42, die jeweils mit einem neuen Abtasttakt $i$ den Speicherwert des davor liegenden Speichers übernehmen und auf ihren Ausgang legen. Neben dem eigentlich an der Delay-Line 41 vorbei geführten aktuellen Abtastwert $r_i$ stellt die Delay-Line an ausgewählten Stellen $N_D$ verzögerte Abtastwerte $r_{i-N_D}\big|_{N_D>0}$ via der als Datenpool 43 bezeichneten Datenübertragung mehreren nachfolgenden Rechenwerken gleichzeitig zur Verfügung.

Die nachfolgenden Koeffizientengeneratoren 45, 48 sowie optional weitere wie 47, 49 geben den aus der Delay-Line 41 zu einem Abtasttakt $i$ entnommenen aktuellen Abtastwert $r_i$ sowie den um $N_\alpha$ Stellen verzögerten Abtastwert

$r_{i-N_\alpha}\big|_{N_\alpha>0}$ in geeigneter Weise auf den nachfolgenden Addierer 44, so dass an dessen Ausgang am Ende eines Rechentaktes $i$ der für diesen Takt berechnete jeweilige Filterausgangswert $y_{Ih\alpha i}$ oder $y_{Qh\alpha i}$ zur Übernahme in den Ergebnisspeicher 46 bereitsteht. Die Koeffizientengeneratoren 45, 48, sowie optional weitere wie 47, 49 sind gleichartig aufgebaut. Mit dem eingangsseitigen Auswahlschalter wird festgelegt, ob der eingehende Abtastwert unverändert oder eine durch eine vor gelagerte Einheit 38 mittels Rechtsschieben erzeugter Bruchteil $\vec{r_i}$; $\vec{\vec{r_i}}$; $\vec{\vec{\vec{r_i}}}$; ... ausgewählt wird, und mit dem ausgangsseitigen Schalter wird jeweils festgelegt, ob diese ausgewählte Variante unverändert oder zur Subtraktion in negierter Form auf den nachfolgenden Addierer 44 gelangt. Ferner ist eine weitere Einheit zum Erzeugen der

Bruchteile $\vec{r}_{i-N_\alpha}$; $\vec{\vec{r}}_{i-N_D}$; $\vec{\vec{\vec{r}}}_{i-N_D}$; .. für 48 vorhanden, die in der Figur 4 aber nicht dargestellt wird, da sie baugleich ist zur Einheit 38. Die optionalen Koeffizientengeneratoren 47, 49 übernehmen an ihren Eingängen die entsprechenden Ergebnisse von der Einheit 38 bzw. der zur Einheit 38 baugleichen weiteren Einheit.

Die baugleichen Koeffizientengeneratoren unterscheiden sich jedoch in ihren Programmabläufen, d.h., in der jeweils zu einem Abtastzeitpunkt $i$ getätigten Auswahl durch den eingangsseitigen und den ausgangsseitigen Auswahlschalter. Der durchgehend umrandete Koeffizientengenerator 45 wählt aus, ob und in welcher Form in einem Abtastakt $i$ der aktuellen Abtastwert $r_i$ ausgewählt wird, und der Koeffizientengenerator 48 wählt aus, ob und in welcher Form der verzögerter Abtastwert $r_{i-N_\alpha}\big|_{N_\alpha>0}$ ausgewählt wird. Äquivalent gilt das für die gestichelt dargestellten optional zusätzlich verwendbaren Koeffizientengeneratoren 47 sowie 49 zur zusätzlichen Addition bzw. Subtraktion von Varianten von $r_i$

bzw. $r_{i-N_\alpha}\big|_{N_\alpha>0}$ zur verfeinerten Koeffizientenerzeugung, wie sie beispielhaft in Gleichung (7) dargestellt wurde.

Die von den Koeffizientengeneratoren 45, 48 und optional 47, 49 weitergeleiten Werte werden mittels Addierwerk 44 zum Ergebniswert des vorherigen Abtasttaktes $y_{Ih\alpha(i-1)}$ bzw. $y_{Qh\alpha(i-1)}$ hinzu addiert, wobei bei dieser Architektur das der Übersichtlichkeit halber nicht detailliert dargestellte Negieren am Ausgang des Koeffizientengenerators 45, 48 und optional 47, 49 bevorzugt durch geschickte Beschaltung des Addierwerks gemäß der Regel - $x = \bar{x} + 1$ mit erledigt wird. Der verzögerte Abtastwert $r_{i-N_\alpha}\big|_{N_\alpha>0}$ ist notwendig, um den Einfluss des ursprünglich zum Ergebnisspeicher hinzu addierten Abtastwerts nach der Filterdurchlaufzeit $F^{-1} \cdot N_\alpha$ wieder rückgängig zu machen. Durch ihn wird im Allgemeinen auch die Filterbandbreite $F \cdot (N_\alpha+1)^{-1}$ bestimmt. Der Ausgangswert des Addierwerts 44 wird mit jedem Abtasttakt in einen Ergebnisspeicher 46 gespeichert und steht so für die Rechnung im nachfolgenden Takt zur Verfügung.

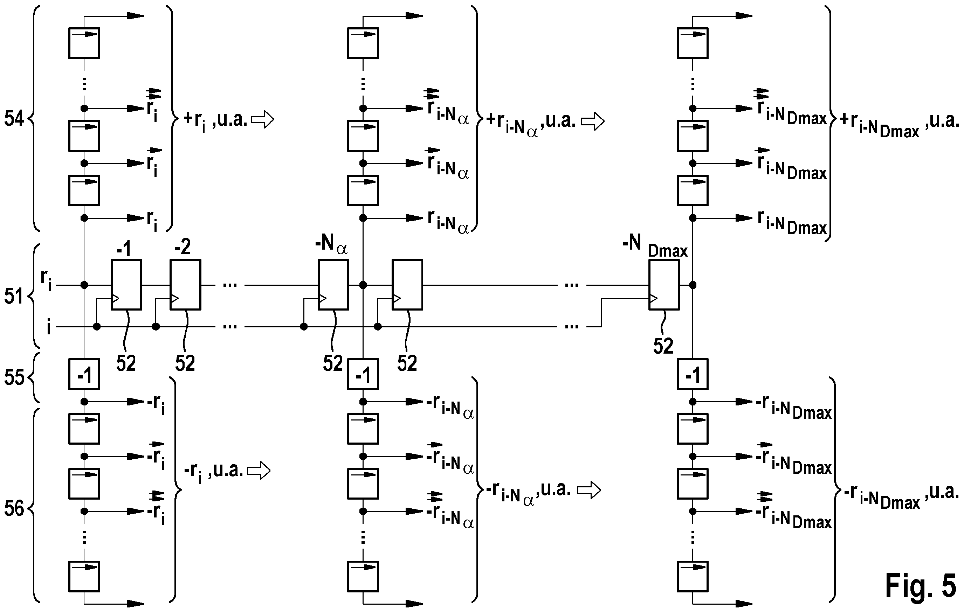

Gemäß einer dritten Ausführungsform, die in Fig. 5 dargestellt ist, ist insbesondere bei einer größeren Zahl von Filtern im Vergleich zur vorherigen Lösung die Zahl der Negierungen und Rechtsschiebungen der abgetasteten

Signale $r_i$ und dessen verzögerten Ausführungen $r_{i-N_\alpha}\big|_{N_\alpha>0}$ gegenüber der vorherigen Ausführungsform zu Lasten eines höheren Verdrahtungsaufwandes und mehrerer Schalterstellungen des Koeffizientengeneratorschaltwerks minimiert.

Gemäß der dritten Ausführungsform weist die erfindungsgemäße Vorrichtung 50 im Wesentlichen Verzögerungsspeicher 52 auf, in denen mit jedem Abtasttakt $i$ die abgetasteten Werte jeweils um eine Abtaststelle in einer Kern-Delay-Line 51 verzögert werden sowie Vorrichtungen 54, 55, 56 zum Bereitstellen von negierten und/oder rechtsgeschobenen Ausführungen des jeweils aktuellen Abtastwertes $r_i$ und/oder der jeweiligen verzögerten Ausführungen $r_{i-N_D}$. Neben zumindest dem aktuellen Abtastwert $r_i$ werden an ausgewählten Stellen $N_D$ zumindest die zugehörigen verzögerten Abtastwerte $r_{i-N_D}$ an den Ausgängen der entsprechenden Verzögerungsspeicher 52 abgegriffen und via der Vorrichtungen 54, 55, 56 an die in den Rechenwerken befindliche Koeffizientenauswahl weitergeleitet.

Somit stellten dieser Ausführungsvariante die Kombination aus der Kern-Delay-Line 51, die Verzögerungsspeicher 52 aufweist, und die unmittelbar an die Kern-Delay-Line 51 gekoppelten Vorrichtungen 54, 55, 56 quasi eine erweiterte Delay-Line dar. Dabei werden in der erweiterten Delay-Line 50 zusätzlich bereits die negierten aktuellen Abtastwerte $-r_i$ sowie an ausgewählten Stellen $N_D$ zumindest die zugehörigen verzögerten negierten Abtastwerte $r_{i-N_D}$ sowie die zugehörigen rechtsgeshifteten Varianten davon in entsprechen mittels Datenpool leitungsvermittelt bzw. mittels Datenbus an die in den Rechenwerken (in Fig. 5 nicht dargestellt) befindliche Koeffizientenauswahl (in Fig. 5

$$\dots r_{\dots} , u.a.$$
$$\Longrightarrow$$

nicht dargestellt) weitergeleitet. In diesem Papier sind der Einfachheit halber diese Datenströme durch $\phantom{xxxxx}$ , d.h. durch (beschriftete) Pfeile angedeutet.

Rechtsschieben 54, 56 ist eigentlich kein separater Verarbeitungsschritt sondern auch durch geeignetes Abgreifen, d.h., durch Verdrahtung lösbar. Negieren ist im Vergleich zur Multiplikation keine aufwändige Operation, sondern es gilt bei endlichem Zahlenraum: $- x = \bar{x} +1$. Das Negieren wird somit auf eine einfache Weise durchgeführt, indem zu der in allen Bit-Stellen invertierten Zahl $\bar{x}$ die Ziffer 1 hinzu addiert wird. Dieses Negieren kann wahlweise in der Delay-Line 55 oder im Rechenwerk 33, 39, 70 durchgeführt werden. Erstere Variante entlastet das Rechenwerk zulasten einer komplexeren Verkabelung. Der Koeffizientengenerator kann dann jedoch sehr aufwandsarm durch Abgreifen der relevanten Bit-Stellen der jeweiligen Speicherzelle des Verzögerungsspeichers der Abtastwerte realisiert werden. Abhängig von der Zahl der in einem Abtasttakt parallel betriebenen Filter wird sich die eine oder andere Ausführungsform als besonders effizient erweisen. Im Umfeld einer konkreten anwenderspezifischen Lösung reduziert sich die Zahl der tatsächlich verwendeten Versionen der Abtastwerte.

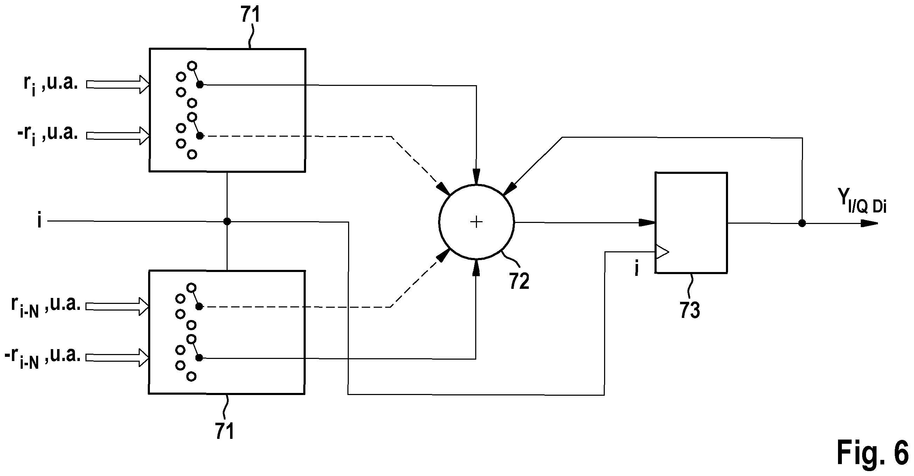

In Fig. 6 wird eine Skizze des Rechenwerkes 70 gezeigt, das sich leicht mit der in Fig. 5 gezeigten dritten Ausführungsform der Erfindung kombinieren lässt. Wie aus der Fig. 6 ersichtlich ist, werden mittels des von der Delay-Line über den Datenpool bereitgestellten aktuellen Abtastwerts $r_i$ sowie des zugehörigen verzögerten Abtastwertes $r_{i-N_D}$ sowie den optional auch hinter der Delay-Line bereitgestellten negierten Ausführungen $- r_i \dots - r_{i-N_D}$ und aller ihrer rechtsgeschobenen Varianten von der Koeffizientenauswahl 71 in Zusammenspiel mit dem Addierer 72 jeweils die den äquivalenten Koeffizienten entsprechenden Formen der Abtastwerte bzw. deren verzögerten Ausführungen ausgewählt. Sollen zur verbesserten Generierung der äquivalenten Koeffizienten je Taktschritt eine weitere Form der Abtastwerte bzw. deren verzögerter Ausführungen berücksichtigt werden, so müssen entsprechende Koeffizientengeneratoren 71 mit entsprechendem vom Abtasttakt $i$ gesteuerten Programm den bereits dargestellten Generatoren parallel geschaltet werden. Das Addierwerk kann asynchron arbeiten. Durch den Abtasttakt $i$ werden die Additionsergebnisse in den Ergebnisspeicher 73 übertragen, an dessen Ausgang somit stets abhängig vom mit dem Abtasttakt $i$ getakteten Programm der Koeffizientengeneratoren 71 die Inphase $y_{IhDi}$ oder die Quadraturphase $y_{QhDi}$ des Filters für eine Filterfrequenz $f_h$ und eine Filterbandbreite $F \cdot (N_D + 1)^{-1}$ zur Verfügung gestellt wird.

Das Abgreifen von in geeigneter Form rechts-verschobener Abtastwerte und das Negieren können in ihrer Reihenfolge auch vertauscht werden. Erfolgt entgegen der Darstellung in Fig. 5 das Negieren erst nach dem Abgreifen rechts-verschobener Abtastwerte aus der Delay-Line, so kann das Negieren mittels Bit-weiser Invertierung der abgegriffenen Abtastwerte und Addition im Addierwerk 72 zuzüglich einer Addition vom 1 realisiert werden.

Die Zahl der für die Realisierung des Koeffizientengenerators erforderlichen Schalter kann reduziert werden, wenn das Abgreifen der Abtastwerte aus der Delay-Line und das rechts-Schieben zeitlich nacheinander erfolgen, optional jeweils unter Nutzung eines Zwischenspeichers.

Das Verzögerungsleitungsmodul "Delay-Line" kann alternativ zu dem dargestellten Verschieben der Abtastwerte von einem Speicher in einen nachfolgenden Speicher auch dadurch realisiert werden, dass die Abtastwerte in einen logisch als Ring organisierten Speicherbereich der Länge $N_{D\,max}$ geschrieben werden und die Positionen der Abtastwerte $r_i, r_{i-N_\alpha} \dots r_{i-N_{Dmax}}$ mittels Zeiger auf die jeweilige Speicherstelle $i$ und den daraus berechneten Werten der Speicherstellen $i, i-N_\alpha, \dots, i - N_{D\,max}$ bestimmt werden.

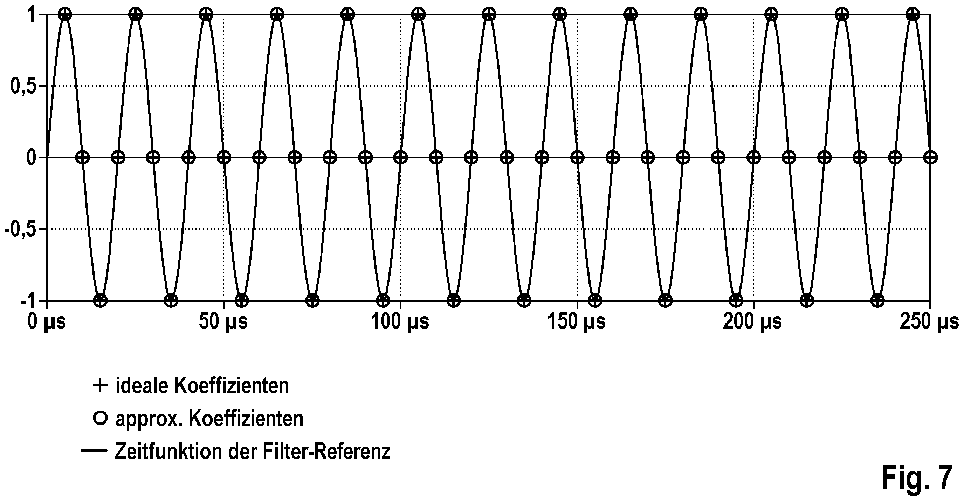

In einer besonders einfachen Ausführung haben die Koeffizienten nur die Werte $\cos(\pi/2 \cdot n) = 1; 0; -1; 0; \dots$ bzw. $\sin(\pi/2 \cdot n) = 0; 1; 0; -1; \dots$. Für den Fall $f_h = 4 \cdot F$ ist von der Koeffizientenwahl das in Fig. 7 gezeigte Koeffiziententiming zu generieren. In Gleichung (5) wurden die Formeln zur Bestimmung der Inphase-Komponente $y_{Ii}$ und der Quadraturphase-Komponente $y_{Qi}$ für diesen Fall bereits hergeleitet.

$$y_{Ii} = \frac{1}{N+1} \cdot \sum_{n=i}^{i-N} \left( \cos(\pi/2 \cdot n) \cdot r_n \right)$$
$$y_{Qi} = \frac{1}{N+1} \cdot \sum_{n=i}^{i-N} \left( \sin(\pi/2 \cdot n) \cdot r_n \right) \qquad (8)$$

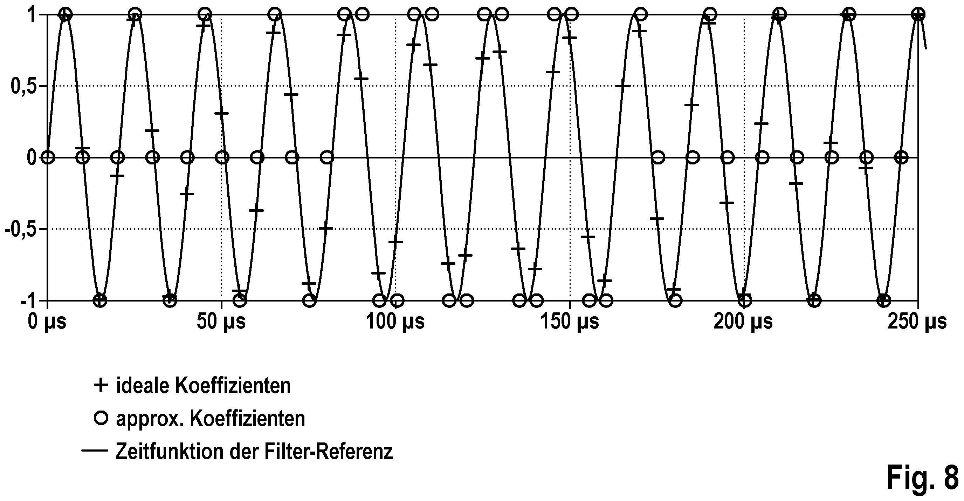

Dem Fachmann ist bekannt, dass der Koeffizient der Quadraturphase-Komponente anhand des Einheitskreises aus der Inphase-Komponente bestimmt werden kann. Deswegen beschränkt sich im Folgenden die Koeffizienten-Diskussion auf eine der zueinander üblicher Weise orthogonalen Phasen. Anhand des in Fig. 7 gezeigten Graphen wird deutlich, dass zu der kontinuierlich dargestellten Zeitfunktion der Filter-Referenz die zu den Abtastwerten gehörigen Koeffizienten, d.h. die hier als ideale Koeffizienten bezeichneten Werte, im Fall $f_h = F/4$ stets mit den approximierten Koeffizienten übereinstimmen können. Anders verhält es sich in dem bei gleicher Abtastfrequenz in Fig. 8 dargestellten Fall $f_h \approx 49$ $kHz \neq F/4$.

Durch Rundung der idealen Koeffizienten auf den Satz möglicher Koeffizientenwerte, der durch die Zahl von Rechts-Schieben und/oder durch die Zahl von Additionen und/oder Subtraktionen eines Abtastwertes durch das Rechenwerk bestimmt wird, kann man die approximierten Koeffizienten bestimmen und damit das Timing des Steuerwerks, das heißt dessen Programm, des als Koeffizientengenerator bezeichneten Schaltwerks festlegen, das im Wesentlichen die aus den in den Figuren mit 33, 45, 47, 48, 49, 71 bezeichneten Komponenten aufweist. In der Praxis wird dieses dargestellte Muster von Addieren, nicht Verwenden und Subtrahieren der Abtastwerte in geeigneter Weise zumeist mittels Schieberegistern realisiert, die das jeweilige Steuerungsmuster des Koeffizientengenerators generieren. Alternativ kann auch die Verwendung einer Nachschlagtabelle (Englisch: "look up table") in Frage kommen.

Nutzt man erfindungsgemäß auch die Möglichkeit, mittels Koeffizientengeneratorsteuerwert aus den einmalig nach rechtsgeschobenen Ausführungen der Abtastwerte als approximierte Koeffizienten auch die Werte 0,5 sowie -0,5 zu verwenden, so ergibt sich gemäß der Berechnungsformel

$$a_{appr.} = 2^{-1} \cdot Runden\left(2 \cdot a_{ideal}\right) \qquad (9)$$

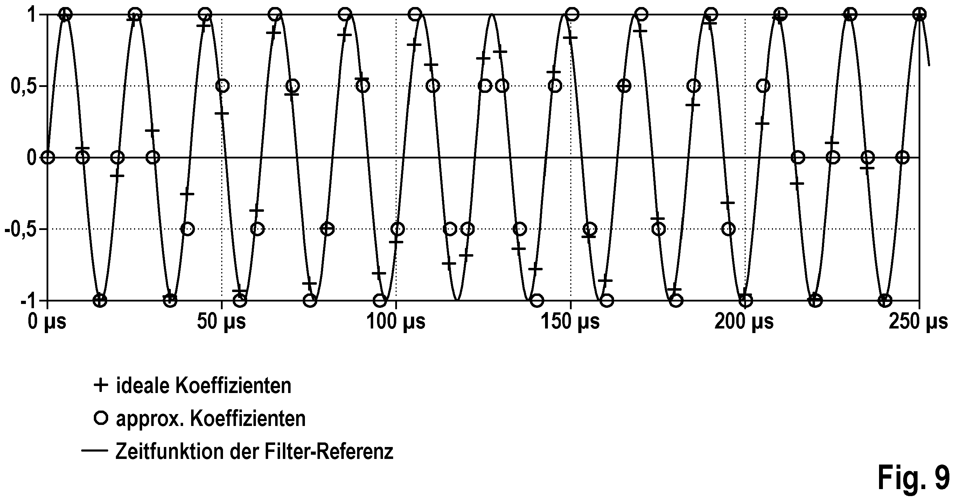

das in Fig. 9 gezeigte geänderte Steuerungsmuster des Koeffizientengenerators. Eine so grobe Approximation der Koeffizienten zur Reduktion auf eine simple Addition/Subtraktion ist insbesondere in dem heute bei der Ultraschall-Umfelddetektion üblichen Fall, dass nämlich die vom Signal benötigte Bandbreite gering gegenüber der Mittenfrequenz $f_c$ eines zu analysierenden Signals ist, vertretbar. Multiplikationen sind in diesem Fall gar nicht erforderlich. Die erforderliche Frequenz von Additionsoperationen reduziert sich im Vergleich zu dem oben besprochenen Fall mit $F = 192 kHz$, $N_{Filter} = 57$ *Stk.* auf $F \cdot N_{Filter} \cdot 2 \cdot N_\alpha = F \cdot N_{Filter} \cdot 2 \cdot 3 \approx 66$ *MHz*.

Beschränkt man sich bei der Realisierung beispielsweise mittels laufzeitabhängiger Verstärkung auf eine kleine Signaldynamik von 8 bit und weniger, kann man diese Architektur leicht mittels parallelisierter Hardware, wie sie z.B. in einem FPGA enthalten ist, realisieren. Ein solches System würde dann mit einer Frequenz von $F = 192 kHz$ auskommen. Alternativ kann auch ein klassischer sequentiell arbeitender Prozessor zum Einsatz kommen. Auch eine Kombination aus paralleler und sequentieller Arbeitsweise ist möglich. Verwendet man beispielsweise einen Prozessor, der gleichzeitig 16 bit verarbeiten kann und beschränkt die Signaldynamik auf 8 bit, so können in einem Arbeitsschritt stets gleichzeitig zwei Operationen ausgeführt werden, wenn es keinen Übertrag zwischen dem unteren Byte und dem oberen der zwei Byte breiten Zahlendarstellung des 16 bit-Prozessors gibt. Bei dem oben besprochenen Fall reduziert sich die Operationsfrequenz auf 33 MHz.

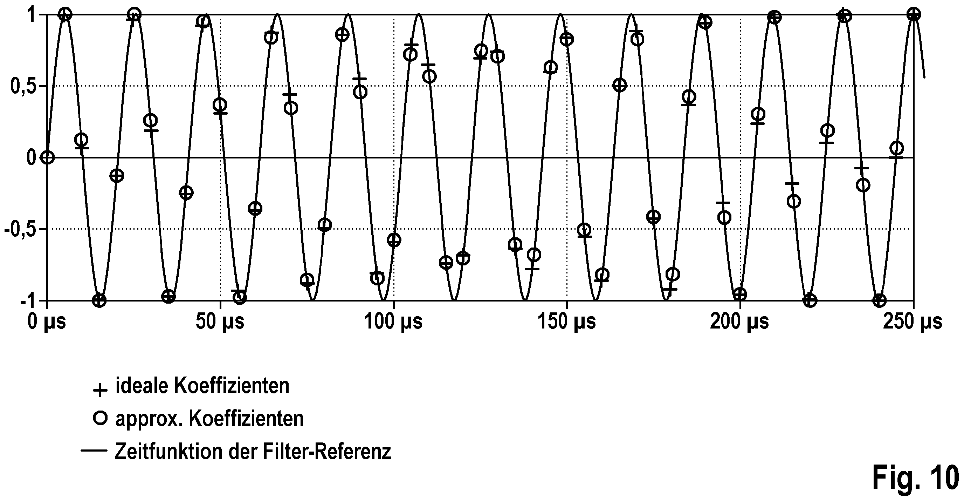

Nutzt man erfindungsgemäß auch die Möglichkeit neben einem optional geshifteten einen weiteren optional geshifteten Wert zu addieren bzw. zu subtrahieren, so ergibt sich bei gleichen Randbedingungen das in Fig. 10 als approximierte Koeffizienten dargestellte Timing des Koeffizientengeneratorschaltwerks. Anhand Fig. 10 wird deutlich, dass die Lage der approximierten Koeffizienten nur noch geringfügig von denen der idealen Koeffizienten abweicht, so dass dieses Quantisierungsrauschen der Koeffizienten infolge des erfindungsgemäßen Verzichts auf aufwendige Multiplizier-Werke für die akustische Umfeldüberwachung selbst bei der Analyse m-ärer Empfangssignale vertretbar sein wird.

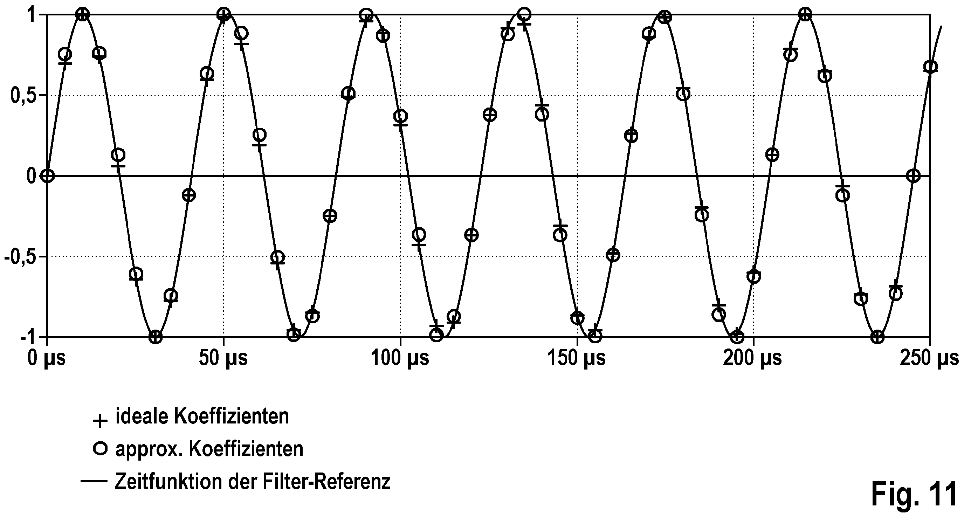

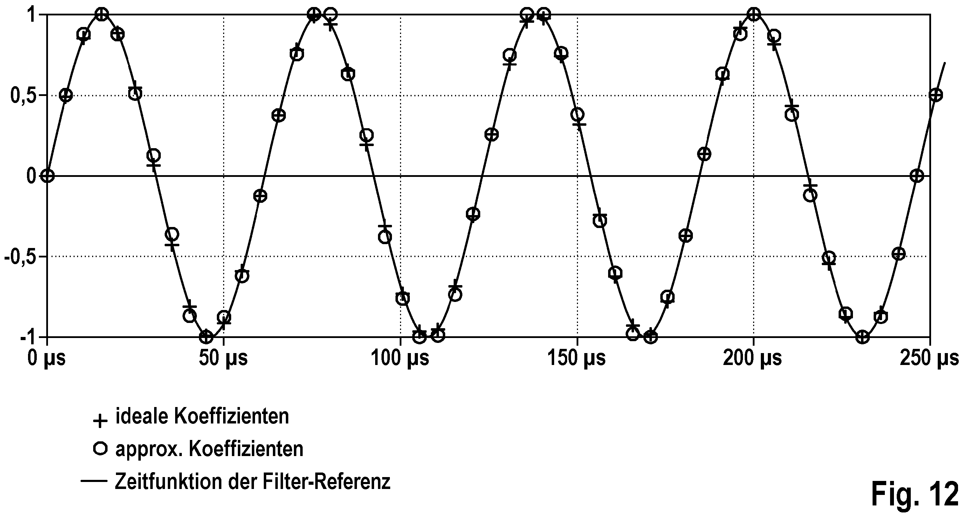

Für die Analyse breitbandigerer abgetasteter Signale, wie sie z.B. bei m-ären Signalen auftreten, sollten die Koeffizienten jedoch etwas feiner generiert werden. Dazu wird in Fig. 11 das Timing der approximierten Koeffizienten für eine Filterfrequenz $f_h \approx 24,5$ $kHz \approx F/8$ gezeigt, sowie in Fig. 12 für eine Filterfrequenz $f_h \approx 16,3$ $kHz \approx F/12$.

In den letzten vorangegangenen Figuren wurden die approximierten Koeffizienten aus den idealen Koeffizienten gemäß der Gleichung $a_{appr} = 8^{-1} \cdot Runden(8 \cdot a_{ideal})$ gebildet.

Anzumerken ist, dass auf die in den Gleichungen (4) und (5) angegebene Division $(N+1)^{-1}$ verzichtet werden kann, wenn alle Rechenergebnisse bei nachfolgenden Vergleichen den gleichen Divisor $(N+1)$ verwenden bzw. anderenfalls die unterschiedlichen Divisoren anderweitig berücksichtig werden.

Anzumerken ist, dass im Gegensatz zu heutigen Systemen, bei denen mittels Schwelle auf die Amplitude nach einem Maximum gesucht wird, die Ortsauflösung durch Auswertung des Verhältnisses der Inphase $y_{IhDi}$ zur Quadraturphase $y_{QhDi}$ eines Filters für eine Filterfrequenz $f_h$ und eine Filterbandbreite $F \cdot (N_D+1)^{-1}$ verbessert werden kann.

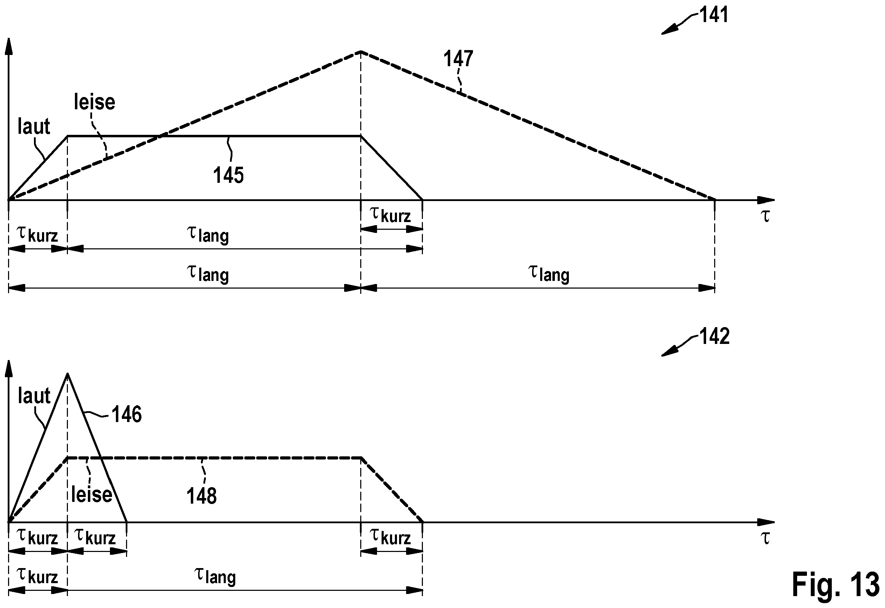

Die erfindungsgemäße Einrichtung eignet sich auch zur Detektion unterschiedlicher Signalformen. Werden erfindungsgemäß beispielsweise für ein und die gleiche Filterfrequenz $f_h$ Signale mit unterschiedlichen Pulsdauern $F^{-1} \cdot (N_\alpha+1)$; $F^{-1} \cdot (N_\beta+1)$; ... erwartet, so sollte im Optimalfall für jede erwartete Pulsform ein auf die jeweilige Pulsform angepasstes Filter verwendet werden, was anhand Fig. 13 deutlich gemacht wird.

Dabei sind in Fig. 13 im oberen Teil die Zeitverläufe der Filterantworten 145, 147 eines auf eine lange Pulsdauer $\tau_{lang} = F^{-1} \cdot (N_\beta+1)$ angepassten Filters (nicht dargestellt) angegeben. Im unteren Teil von Fig. 13 sind die entsprechenden Zeitverläufe der Filterausgangssignale 146, 148 eines auf kurze Pulsdauern $\tau_{kurz} = F^{-1} \cdot (N_\alpha+1)$ angepassten Filters (nicht dargestellt) aufgetragen. Auf der Abszisse ist jeweils die Zeit und auf der Ordinate die Stärke der jeweiligen Filterausgangssignale 145, 146, 147, 148 aufgetragen. Gemäß Figur 13 sind die Zeitverläufe der Filterausgangssignale der jeweiligen Filter (nicht dargestellt) bei Beaufschlagung mit einem lauten kurzen Puls (nicht dargestellt) der Dauer $\tau_{kurz} < \tau_{lang}$ am jeweiligen Filtereingang durchgezogen dargestellt und mit 145, 146 bezeichnet, während der Zeitverläufe der Filterausgangssignale als Reaktion auf einen langen leisen Puls (nicht dargestellt) der Dauer $\tau_{lang}$ am Filtereingang gestichelt dargestellt und mit 147, 148 bezeichnet sind.

Erwartungsgemäß steigen die durchgezogen dargestellten Filterausgangswerte 145, 146 bei beiden Filtern (nicht dargestellt), d.h. gemäß sowohl dem oberen als auch dem unteren Teil von Fig. 13 unabhängig von deren Anpassung bei Beaufschlagung mit einem lauten Puls (nicht dargestellt) anfangs stärker als die gestrichelt dargestellten Verläufe der Filterausgangswerte 147, 148, die bei Beaufschlagung mit einem leisen Puls (nicht dargestellt) entstehen. Aufgrund der kurzen Pulsdauer des lauten Pulses (nicht dargestellt) bricht dieser Anstieg der Zeitverläufe der Filterausgangswerte 145, 146 jedoch nach der Dauer des kurzen Pulses 143 $\tau_{kurz}$ bei beiden Filtern (nicht dargestellt) ab. Bei dem auf lange Pulse angepassten Filter (nicht dargestellt) gemäß dem oberen Teil von Fig. 13 verbleibt der Verlauf des Filterausgangswerts 145 für die Dauer $\tau_{lang} - \tau_{kurz}$ auf dem erreichten Plateau, bevor er mit der dem ursprünglichen Anstieg äquivalenten Steilheit in der Zeit $\tau_{kurz}$ abnimmt. Die im unteren Teil dargestellte Filterantwort 146 des auf kurze Pulse angepassten Filters (nicht dargestellt) nimmt hingegen unmittelbar nach Erreichen des Hochpunktes wieder ab und erreicht bereits nach einer Zeit von $2 \cdot \tau_{kurz}$ den Ausgangswert vor der Anregung.

Da voraussetzungsgemäß der lange Puls (nicht dargestellt) mit der Dauer $\tau_{lang}$ leiser ist, steigt der gestichelt dargestellte Verlauf der Filterausgänge 147, 148 beider Filter (nicht dargestellt) bei Beaufschlagung mit diesem Puls (nicht dargestellt) anfangs mit einer geringeren Steilheit als bei zuvor erörterten Beaufschlagung mit einem lauten Puls (nicht dargestellt) an. Bei dem im oberen Teil dargestellten Verlauf 147 des auf die lange Pulsdauer $\tau_{lang}$ angepassten Filters (nicht dargestellt) dauert der Anstieg jedoch über die gesamte Dauer des eingehenden langen Pulses (nicht dargestellt) von $\tau_{lang}$ an und erreicht trotz des geringeren Anstiegs einen größeren Maximalwert als der Zeitverlauf der Filterantwort 145 bei Anregung des gleichen, auf lange pulse angepassten Filters (nicht dargestellt) durch einen viel lauteren aber kürzeren Puls (nicht dargestellt). Allein anhand der Stärke der Filterausgangswerte 145, 147 kann das auf lange Pulsdauern $\tau_{lang}$ angepasste Filter (nicht dargestellt) entsprechende lange Pulse (nicht dargestellt) deutlich detektieren, selbst wenn sie wie im angenommenen Fall leiser sind. Darüber hinaus ist eine Signalformunterscheidung anhand der Antwortzeiten der Filterausgangswerte leicht möglich.

Der im unteren Teil dargestellte Verlauf des Filterausgangs 148 des auf kurze Pulse angepassten Filters (nicht dargestellt) erreicht trotz Beaufschlagung mit einem langen Puls (nicht dargestellt) am Eingang bereits nach $\tau_{kurz}$ seinen Maximalwert, den er über die Plateaudauer $\tau_{lang} - \tau_{kurz}$ hält, bevor er mit einer seinem Anstieg äquivalenten Steigung abfällt. Im angenommenen Fall kann das auf kurze Pulse angepasste Filter (nicht dargestellt) somit allein anhand des Maximalwertes des Filterausgangs das Eintreffen eines kurzen Pulses (nicht dargestellt) deutlich vom Eintreffen eines langen Pulses (nicht dargestellt) unterscheiden.

Daraus wird insbesondere deutlich, dass das auf die Pulsdauer angepasste Filter bei Eintreffen eines Pulses seiner Pulsdauer einen höheren Filterausgangswert generiert, als bei einem wie im angenommenen Fall mit ähnlicher Pulsenergie versehenen Puls mit jedoch anderer Pulsdauer. Ein weiteres Unterscheidungsmerkmal ist die Dauer der Filterausgangssignale. Die Antwort eines auf eine Pulsdauer $F^{-1} \cdot N_{D\ Filter}$ angepassten Filters auf einen Puls der Dauer $F^{-1} \cdot N_{D\ Singal}$ hat eine Gesamtfußbreite von $F^{-1} \cdot (N_{D\ Filter} + N_{D\ Singal})$ und hat bei einer angepassten Filterung die Form eines gleichseitigen Dreiecks bzw. bei Fehlanpassung ein Plateau der Dauer $F^{-1} \cdot |N_{D\ Filter} - N_{D\ Singal}|$. Unter Berücksichtigung dieser Zusammenhänge kann bereits mit einem der beiden Filter (nicht dargestellt) gemäß Fig. 13 anhand der Breite der Filterausgänge auf das Eintreffen von Pulsen unterschiedlicher Pulsdauer am Filtereingang unterschieden werden. Beträgt beispielsweise $\tau_{lang} = 4 \cdot \tau_{kurz}$ und werden mit einem auf kurze Pulse angepassten Filter (nicht dargestellt) das Eintreffen unterschiedlicher Signalformen analysiert, so erzeugt das Eintreffen eines kurzen Pulses (nicht dargestellt) eine Filterantwort 146 mit einer Dauer von $2 \cdot \tau_{kurz}$, während das Eintreffen eines langen Pulses (nicht dargestellt) eine deutlich längere Filterantwort 148 mit einer Dauer von $5 \cdot \tau_{kurz}$ erzeugt.

Neben der einfachen Laufzeitmessung mittels einer Schwelle kann die Auswerteeinrichtung diese Erkenntnis zur detaillierten Analyse der eingehenden Signale nutzen, z.B. um Aussagen über bestimmte Objektformen zu machen, die ein ausgesandtes Schallsignal an ihrer Reflexionsoberfläche infolge räumlich verteilter Reflexion in seiner Pulsdauer verändern oder um z.B. anhand der Pulsform auf den Zeitpunkt der Abstrahlung des Schallsignals zu schlussfolgern und um auf diese Weise Aussagen über die Schalllaufzeit und somit über Positionen von Schallquellen und/oder reflektierenden Objekten zueinander in der Szene treffen zu können.

**Patentansprüche**

1. Vorrichtung (40) zur Erfassung von akustischen Signalen einer Schallquelle, insbesondere von Ultraschallimpulsen bei der Umfelddetektion eines Fahrzeugs, umfassend:

eine Abtastvorrichtung zum Umwandeln von eingehenden kontinuierlichen Signalen in gemäß einem Abtasttakt $i$ zeitdiskretisierte Signale, wobei ein auf die Abtastvorrichtung folgendes Verzögerungsleitungsmodul (41), das Abtastwerte $r_i$ von der Abtastvorrichtung empfängt und dazu eingerichtet ist, gleichzeitig sowohl einen an seinem

Eingang anliegenden Abtastwert $r_i$ sowie verzögerte Abtastwerte $r_{i-N_D}\big|_{N_D>0}$ bereitzustellen, **gekennzeichnet durch**:

mehrere auf das Verzögerungsleitungsmodul (41) folgende, mit filternden Eigenschaften ausgestattete, in einem Taktintervall parallel zueinander arbeitende und jeweils unterschiedlich verzögerte Abtastwerte $r_{i-N_D}\big|_{N_D>0}$ verwendende Rechenwerke (39),

wobei jedes Rechenwerk (39) zur Berechnung von Inphasen oder Quadraturphasen vorgesehen ist und aufweist:

mehrere Einheiten (38) zum Erzeugen von Bruchteilen der Abtastwerte $r_i$, $r_{i-N_D}\big|_{N_D>0}$ mittels einfacher oder mehrfacher Rechtsschiebeoperationen und als Koeffizientengeneratoren ausgebildete Schaltwerke (45, 47, 48, 49), wobei ein erstes Schaltwerk dazu eingerichtet ist, in dem Taktintervall mittels eines eingangsseitigen Auswahlschalters einen von dem Verzögerungsleitungsmodul (41) bereitgestellten Abtastwert $r_i$ oder einen mittels der Einheiten (38) zum

Erzeugen von Bruchteilen erzeugten Bruchteil $\vec{r}_i$; $\vec{\vec{r}}_i$ ; $\vec{\vec{\vec{r}}}_i$ ; ... des Abtastwertes $r_i$ auszuwählen, und mittels eines ausgangsseitigen Auswahlschalters festzulegen, ob der ausgewählte Abtastwert $r_i$ oder

der ausgewählte Bruchteil $\vec{r}_i$; $\vec{\vec{r}}_{i-N_D}$ ; $\vec{\vec{\vec{r}}}_{i-N_D}$ ; ...unverändert oder in negierter Form mittels eines dem Schaltwerk (45, 47, 48, 49) nachfolgenden Addierers (44) der Vorrichtung zu einem bisherigen Rechenergebnis, das einem bisherigen Inphase-Wert $y_{IhD(i-1)}$ oder einem bisherigen Quadraturphase-Wert $y_{QhD(i-1)}$ entspricht, addiert wird, sowie mindestens ein zweites, zum ersten Schaltwerk baugleiches Schaltwerk, das dazu eingerichtet ist, in dem Taktintervall mittels eines eingangsseitigen Auswahlschalters einen von dem Verzögerungsleitungsmodul (41) bereitgestellten Abtastwert $r_{i-N_D}\big|_{N_D>0}$

oder einen mittels der Einheiten (38) zum Erzeugen von Bruchteilen erzeugten Bruchteil $\vec{r}_{i-N_D}$ ; $\vec{\vec{r}}_i$ ;

$\vec{\vec{\vec{r}}}_i$ ; ... des Abtastwertes $r_{i-N_D}\big|_{N_D>0}$ auszuwählen, und mittels eines ausgangsseitigen Auswahlschalters festzulegen, ob der ausgewählte Abtastwert $r_{i-N_D}\big|_{N_D>0}$ oder der ausgewählte Bruchteil $\vec{r}_{i-N_D}$ ;

$\vec{r}_{i-N_D}$ ; $\vec{\vec{r}}_{i-N_D}$ ; ... unverändert oder in negierter Form mittels des dem Schaltwerk (45, 47, 48, 49) nachfolgenden Addierers (44) der Vorrichtung zu einem bisherigen Rechenergebnis, das einem bisherigen Inphase-Wert $y_{IhD(i-1)}$ oder einem bisherigen Quadraturphase-Wert $y_{QhD(i-1)}$ entspricht, addiert wird,

wobei jedes Rechenwerk ferner aufweist:

einen mit dem Abtasttakt $i$ steuerbaren Ergebnisspeicher (46), welcher dazu eingerichtet ist, das von dem Addierer (44) ausgegebene Rechenergebnis als neues Rechenergebnis, das einem neuen Inphase-Wert $y_{IhDi}$ oder einem neuen Quadraturphase-Wert $y_{QhDi}$ entspricht, auszugeben und dem Addierer (44) im nachfolgenden Takt zur Weiterverarbeitung bereitzustellen.

2. Kraftfahrzeug mit einem Fahrerassistenzsystem, das eine Vorrichtung (40) nach Anspruch 1 aufweist.

**Claims**

1. Device (40) for detecting audible signals of a sound source, in particular ultrasonic pulses during the detection of the surroundings of a vehicle, comprising:

a sampling device for converting incoming continuous signals into signals which are time-discretized according to a sampling clock $i$, wherein a delay line module (41) which follows the sampling device and receives sampled values $r_i$ from the sampling device and is configured to make available simultaneously both a sampled value $r_i$

$$r_{i-N_D}\big|_{N_D>0},$$

present at its input as well as delayed sampled values

**characterized by**:

a plurality of arithmetic units (39) which follow the delay line module (41) are equipped with filtering properties, operate in parallel with one another with a clocking interval and respectively use sampled values

$$r_{i-N_D}\big|_{N_D>0},$$

with different delays,

wherein each arithmetic unit (39) is provided to calculate in-phases or quadrature phases and has: a plurality of units (38) for generating fractions of the sampled values $r_i$, $\quad r_{i-N_D}\big|_{N_D>0},\quad$ by means of simple or multiple right-shift operations and switching units (45, 47, 48, 49) which are embodied as coefficient generators, wherein a first switching unit is configured to select, in the clocking interval by means of an input-side selector switch, a sampled value $r_i$ which is made available by the delay line module (41) or a fraction

$\vec{r}_i; \vec{\vec{r}}_i$ ; $\vec{\vec{\vec{r}}}_i$ ; ... of the sampled value $r_i$, generated by means of the units (38) for generating fractions, and to define by means of an output-side selector switch whether the selected sampled value $r_i$ or the selected

fraction $\vec{r}_i; \vec{\vec{r}}_i$ ; $\vec{\vec{\vec{r}}}_i$ ; ... in an unchanged or in a negated form by means of an adder element (44), following the switching unit (45, 47, 48, 49), of the device is added to a previous computational result which corresponds to a previous in-phase value $y_{IhD(i-1)}$ or a previous quadrature phase value $y_{QhD(i-1)}$, and at least one second switching unit which is of identical design to the first switching unit and is configured to select, in the clocking interval by means of an input-side selector switch, a sampled value $\quad r_{i-N_D}\big|_{N_D>0},\quad$ which is made

available by the delay line module (41) or a fraction $\vec{r}_{i\text{-}N_D}$; $\vec{\vec{r}}_i$ ; $\vec{\vec{\vec{r}}}_i$ ; ... of the sampled value $r_{i-N_D}\big|_{N_D>0}$' generated by means of the units (38) for generating fractions, and to define by means of an ouput-side selector switch whether the selected sampled value $r_{i-N_D}\big|_{N_D>0}$' or the selected fraction $\vec{r}_{i\text{-}N_D}$; $\vec{\vec{r}}_i$ ; $\vec{\vec{\vec{r}}}_i$ ; ... in unchanged or in a negated form by means of the adder element (44) following the switching unit (45, 47, 48, 49), of the device is added to a previous computational result which corresponds to a previous in-phase value $y_{IhD(i-1)}$ or a previous quadrature phase value $Y_{QhD(i-1)}$, wherein each computational unit also has:

a result memory (46) which can be controlled with the sampling clock $i$ and which is configured to output the computational result output by the adder element (44), as a new computational result, which corresponds to a new in-phase value $y_{IhDi}$ or a new quadrature phase value $y_{QhDi}$, and to make it available to the adder element (44) in the subsequent clock cycle for further processing.

**2.** Motor vehicle having a driver assistance system which has a device (40) according to Claim 1.

**Revendications**

**1.** Dispositif (40) permettant de détecter des signaux acoustiques provenant d'une source sonore, en particulier des impulsions ultrasonores, lors de la détection de l'environnement d'un véhicule, comprenant :

un dispositif d'échantillonnage pour convertir des signaux continus entrants en signaux à valeurs discrètes en temps selon une cadence d'échantillonnage i, dans lequel un module de ligne de retard (41) après le dispositif d'échantillonnage, recevant des valeurs d'échantillonnage $r_i$ du dispositif d'échantillonnage et étant aménagé pour fournir en même temps à la fois une valeur d'échantillonnage $r_i$ présente à son entrée et des valeurs d'échantillonnage retardées $r_{i-N_D|N_D>0}$'
**caractérisé par** :

plusieurs unités arithmétiques (39) après le module de ligne de retard (41), dotées de propriétés filtrantes, fonctionnant en parallèle les unes aux autres dans un intervalle de cadence et utilisant respectivement différentes valeurs d'échantillonnage retardées $r_{i-N_D|N_D>0}$'
dans lequel chaque unité arithmétique (39) est prévue pour calculer des composantes en phase ou en quadrature et présente :

plusieurs unités (38) pour produire des fractions des valeurs d'échantillonnage $r_i$, $r_{i-N_D|N_D>0}$ au moyen d'opérations de décalage à droite simples ou multiples et des unités de commutation (45, 47, 48, 49) réalisées sous forme de générateurs de coefficients, une première unité de commutation étant aménagée pour sélectionner, dans l'intervalle de cadence au moyen d'un commutateur de sélection côté entrée, une valeur d'échantillonnage $r_i$ fournie par le module de ligne de retard (41) ou une fraction $\vec{r}_i$; $\vec{\vec{r}}_i$ ; $\vec{\vec{\vec{r}}}_i$ ; ... de la valeur d'échantillonnage $r_i$, produite au moyen des unités (38) de production de fractions, et pour déterminer au moyen d'un commutateur de sélection côté sortie si la valeur d'échantillonnage sélectionnée $r_i$ ou la fraction sélectionnée $\vec{r}_i$; $\vec{\vec{r}}_i$ ; $\vec{\vec{\vec{r}}}_i$ ; ... est additionnée sans changement ou sous forme inversée, au moyen d'un additionneur (44) du dispositif, consécutif à l'unité de commutation (45, 47, 48, 49), à un résultat de calcul déjà obtenu correspondant à une valeur en phase $y_{IhD(i-1)}$

déjà obtenue ou à une valeur en quadrature $y_{QhD(i-1)}$ déjà obtenue, ainsi qu'au moins une deuxième unité de commutation de construction identique à la première unité de commutation qui est aménagée pour sélectionner, dans l'intervalle de cadence au moyen d'un commutateur de sélection côté entrée, une valeur d'échantillonnage $r_{i-N_{D}|N_{D}>0}$ fournie par le module de ligne de retard (41) ou une fraction $\vec{r}_{i-N_D};\ \vec{\vec{r}}_i\ ;\ \vec{\vec{\vec{r}}}_i\ ;\ ...$ de la valeur d'échantillonnage $r_{i-N_{D}|N_{D}>0}'$ produite au moyen des unités (38) de production de fractions, et pour déterminer au moyen d'un commutateur de sélection côté sortie si la valeur d'échantillonnage sélectionnée $r_{i-N_{D}|N_{D}>0}$ ou la fraction sélectionnée $\vec{r}_{i-N_D};\ \vec{\vec{r}}_i\ ;\ \vec{\vec{\vec{r}}}_i\ ;\ ...$ est additionnée sans changement ou sous forme inversée au moyen de l'additionneur (44) du dispositif, consécutif à l'unité de commutation (45, 47, 48, 49), à un résultat de calcul déjà obtenu correspondant à une valeur en phase $y_{IhD(i-1)}$ déjà obtenue ou à une valeur en quadrature $y_{QhD(i-1)}$ déjà obtenue, chaque unité de calcul présentant en outre :

une mémoire de résultat (46) pouvant être commandée par la cadence d'échantillonnage i et étant aménagée pour fournir le résultat de calcul sorti par l'additionneur (44) comme un nouveau résultat de calcul correspondant à une nouvelle valeur en phase $y_{IhDi}$ ou à une nouvelle valeur en quadrature $y_{QhDi}$ et pour les fournir à l'additionneur (44) dans la cadence suivante en vue d'un traitement ultérieur.

2. Véhicule à moteur avec un système d'aide au conducteur présentant un dispositif (40) selon la revendication 1.

EP 2 791 700 B1

**Fig. 1**

(Stand der Technik)

Fig. 2

Fig. 3

Fig. 4

EP 2 791 700 B1

Fig. 5

EP 2 791 700 B1

Fig. 6

+ ideale Koeffizienten

O approx. Koeffizienten

— Zeitfunktion der Filter-Referenz

Fig. 7

EP 2 791 700 B1

+ ideale Koeffizienten

O approx. Koeffizienten

— Zeitfunktion der Filter-Referenz

Fig. 8

EP 2 791 700 B1

+ ideale Koeffizienten

O approx. Koeffizienten

— Zeitfunktion der Filter-Referenz

**Fig. 9**

+ ideale Koeffizienten

O approx. Koeffizienten

— Zeitfunktion der Filter-Referenz

Fig. 10

EP 2 791 700 B1

+ ideale Koeffizienten

O approx. Koeffizienten

— Zeitfunktion der Filter-Referenz

Fig. 11

EP 2 791 700 B1

+ ideale Koeffizienten

O approx. Koeffizienten

— Zeitfunktion der Filter-Referenz

Fig. 12

EP 2 791 700 B1

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2144069 A2
- WO 2011009786 A1
- WO 2007056104 A2
- US 5272656 A

**In der Beschreibung aufgeführte Nicht-Patentliteratur**

- **KARL, MATTHIAS.** Möglichkeiten der Nachrichtenübertragung über elektrische Energieverteilnetze auf der Grundlage europäischer Normen. VDI Verlag, 1997